(19) **Europäisches Patentamt / European Patent Office / Office européen des brevets**

(11) **EP 4 498 132 A1**

(12) **EUROPÄISCHE PATENTANMELDUNG**

(43) Veröffentlichungstag:
**29.01.2025 Patentblatt 2025/05**

(21) Anmeldenummer: **23187454.6**

(22) Anmeldetag: **25.07.2023**

(51) Internationale Patentklassifikation (IPC):
**G01W 1/10** (2006.01)    **G01S 13/95** (2006.01)
**G01W 1/14** (2006.01)

(52) Gemeinsame Patentklassifikation (CPC):
**G01W 1/14; G01S 13/86; G01S 13/951; G01W 1/10**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Deutsche Telekom AG**
**53113 Bonn (DE)**

(72) Erfinder: **Schmitt, Florian-Leon**
**53227 Bonn (DE)**

(74) Vertreter: **Braun-Dullaeus Pannen Emmerling Patent- & Rechtsanwaltspartnerschaft mbB Platz der Ideen 2 40476 Düsseldorf (DE)**

Bemerkungen:
Geänderte Patentansprüche gemäss Regel 137(2) EPÜ.

(54) **TECHNIKEN ZUR BESTIMMUNG VON LUFTBESTANDTEILEN, INSBESONDERE VON REGEN, IN EINEM GEBIET**

(57) Die vorliegende Erfindung betrifft Techniken zur Bestimmung von Luftbestandteilen, insbesondere von Regen, in einem Gebiet, wobei das Verfahren die folgenden Schritte umfasst:

• Messen der Luftbestandteile in dem Gebiet mittels eines ersten Messverfahrens, wobei das erste Messverfahren auf einer Radarmessung basiert, wobei die Messung des ersten Messverfahrens als Ergebnis einen Absolutwert der Luftbestandteile $RI_{Radar}$ und/oder einen Messfehler des Absolutwerts der Luftbestandteilen $\sigma_{RI,Radar}$ für Messpunkte des Gebiets ergibt;

• Messen der Luftbestandteile in dem Gebiet mittels eines zweiten Messverfahrens, wobei das zweite Messverfahren auf einer ersten Auswahl von Messparametern einer Dämpfungsmessung von Telekommunikationssignalen in dem Gebiet basiert, wobei die Messung des zweiten Messverfahrens als Ergebnisse einen Absolutwert der Luftbestandteile $RI_{Tele}$ und/oder einen Messfehler des Absolutwerts der Luftbestandteilen $\sigma_{RI,Tele}$ für Messpunkte des Gebiets ergibt;

wobei die Ergebnisse des ersten Messverfahrens und des zweiten Messverfahrens miteinander funktional kombiniert werden, um einen kombinierten Absolutwert der Luftbestandteile $RI_{Radar-Tele}$ und/oder einen kombinierten Messfehler des Absolutwerts der Luftbestandteilen $\sigma_{RI,Radar-Tele}$ zu berechnen.

Fig. 2

EP 4 498 132 A1

Processed by Luminess, 75001 PARIS (FR)

**(Forts. nächste Seite)**

(*) = Bei der CML Auswahl wird versucht einige bisherige CMLs beizubehalten, falls Start bereits mit Radar+CML erfolgte.
(**) = Liefert interpolierte Messwerte und deren Genauigkeitsmaße

1 — Änderung der CML Auswahl oder ggf. Veränderung der Bedarfstrigger

**Regen-Auffangbehälter**
mit realen B-Messwerte u. Bsigma-Messgenauigkeiten an den bekannten Positionen (automatische Auslesung der wahren Regenmengen in Bodennähe)

210

B1

185

2 — Einzelne
3 — Positionen
4 — mit B-Messwert
5 — u. Bsigma
6

B2

B3

...

Bv

225 — Iteration

Prognose durch fiktive CML-Messungen

5 — 7 — 8 — **Fiktive RadarCML_angeeicht_RIsigma(L,B)**

215

6 — Prüfung der RadarCML_angeeicht_Risigma auf Zielerreichung — Nein

225

Ja — 7 — Start von CML Messungen

220

Abb. 1: Übersichtsdiagramm
Genauigkeitsbasierte Planung angeeichter Regenintensitätsbestimmungen (RadarCML_angeeicht_RI) aus dynamischer Kombination von aktueller Boden-Radar- und fiktiver Richtfunk-Messungen (CML)

# Fig. 2 (Continued)

**Beschreibung**

Die vorliegende Erfindung betrifft das technische Gebiet zur Bestimmung von Luftbestandteilen, insbesondere von Regen, in einem Gebiet. Hierzu beschreibt die Erfindung ein dementsprechendes Verfahren, einen Mess-Server, ein System sowie ein Computerprogramm.

Aus dem Stand der Technik bekannt ist, dass eine Ermittlung von Niederschlagsmengen üblicherweise mittels sogenannter Auffangbehälter und/oder Radarmessungen durchgeführt wird.

Es ist ein bekanntes Problem der Auffangbehälter bei der Messung von Regenmengen, dass diese nur punktuell messen und eine hohe Verdichtung der Messpunkte eine Erhöhung der Kosten und des Ableseaufwandes zur Folge hat, die typischerweise mit der Anzahl der Auffangbehälter skaliert. Typischerweise sind auch die entsprechenden Entleerungen sehr aufwendig, da diese in der Regel nicht automatisierbar technisch umgesetzt sind. Zudem kann es vorkommen, dass die Auffangbehälter an bestimmten Orten gar nicht anbringbar sind. Somit sind Auffangbehälter in der Regel für eine hochgenaue Ermittlung für größere Flächen nicht geeignet.

Eine weitere - alleine oder in Kombination mit den Auffangbehältern - genutzte Möglichkeit, um Regenmengen zu bestimmen, ist eine automatisierbare Radarmessung. Zwar ist die automatisierbare Radarmessung aus größeren Höhen in der Lage quasi lückenlose Messwerte für größere Flächen zu ermitteln, hat aber den Nachteil, dass ihre Genauigkeit nicht besonders gut ist, da die Radarmessung die Regenmengen quasi über den gesamten Laufweg hinweg mittelt und deswegen eine schlechte örtliche Auflösung zur Folge hat. Zudem können auch Luftfeuchten und andere Verunreinigungen entlang des langen Signalwegs die Messungen verfälschen.

Der vorliegenden Erfindung liegt daher die Aufgabe zu Grunde, Techniken anzugeben, die eine effiziente Bestimmung von Luftbestandteilen oder Aerosolen, insbesondere von Regen, in den relevanten erdnahen Schichten ermöglichen. Bevorzugt sind diese Techniken zudem kostengünstig als auch automatisierbar. Zudem ist es die Aufgabe der Erfindung die eingangs genannten Nachteile des Stands der Technik zumindest zum Teil zu beseitigen.

Die vorliegende Erfindung löst diese Aufgabe durch die Merkmale der unabhängigen Ansprüche.

Die Merkmale der im Folgenden beschriebenen verschiedenen Aspekte der Erfindung bzw. der verschiedenen Ausführungsbeispiele sind miteinander kombinierbar, sofern dies nicht explizit ausgeschlossen ist oder sich technisch zwingend ausschließt.

Ganz allgemein können die Techniken der Erfindung verwendet werden, um Aerosole oder Luftbestandteile bzw. eine Menge an Aerosolen oder an Luftbestandteile zu bestimmen. Häufig wird dies allerdings am konkreten Beispiel des Regens erläutert, was die Erfindung nicht beschränken soll, sondern lediglich dazu dient, die Erfindung möglichst anschaulich zu beschreiben, da der Anwendungsfall für den Regen der bekannteste und anschauliche ist. Weitere beispielhafte Anwendungsfelder der Erfindung sind Niederschläge wie Schnee oder auch andere Luftanreicherungen/-Verunreinigungen, wie Insekten oder Schadstoffpartikel. Eine Randbedingung ist hierbei lediglich, dass die vorgestellten technischen Mess-Mittel auch in der Lage sind für die verschiedenartigen Luftbestandteile die entsprechenden Messungen vorzunehmen.

Gemäß einem ersten Aspekt der Erfindung ist ein Verfahren zur Bestimmung von Luftbestandteilen, insbesondere von einer Aerosolen wie zum Beispiel Regen, in einem Gebiet angegeben. Das Verfahren kann zumindest teilweise auf einem Server, insbesondere einem Mess-Server, implementiert sein, wobei insbesondere die Messungen von diesem Server auslösbar sind. Das Verfahren weist die folgenden Schritte auf:

- Messen der Luftbestandteile in dem Gebiet mittels eines ersten Messverfahrens, wobei das erste Messverfahren auf einer Radarmessung basiert, wobei die Messung des ersten Messverfahrens als Ergebnis einen Absolutwert der Luftbestandteile $RI_{Radar}$ und/oder einen Messfehler des Absolutwerts der Luftbestandteilen $\sigma_{RI,Radar}$ für Messpunkte des Gebiets ergibt;

  ◦ RI ist insbesondere eine Intensität pro Flächen oder Volumeneinheit. Im Falle von Regen kann die Dimension von RI, insbesondere in Bodennähe, sein: Liter pro Quadratmeter (l/qm) oder der Höhe in Millimetern (mm). Auch andere Dimensionen können prinzipiell verwendet werden, wobei umgangssprachlich jede Dimension angibt, wie viel Regen in einem bestimmten Bereich vorhanden ist.

  ◦ Als Messeinheiten, insbesondere Messeinheiten eines ersten Typs, können für Radarmessung Radarstationen verwendet werden, die insbesondere eigens für die Regenmessungen beispielsweise in Deutschland über ein größeres Gebiet aufgestellt sind. Die Radarstationen Messen indem sie Radarkegel aussenden, wobei die Radarkegel durch ihre Schwenkbarkeit flexibel Großraumbereiche ausmessen können, sodass quasi eine lückenlose erste Messung vorgenommen werden kann. Lückenlos in diesem Sinne ist allerdings nicht als unendlich viele Messpunkte zu verstehen, sondern bezogen auf eine wohl definierte Auflösung von beispielsweise 10 km pro 5 km, 1 km, 10 m. Die Messungenauigkeiten der ungeeichten Radarmessungen $RI_{Radar,ungeeicht}$ sind bekannt, da insbesondere die funktionalen Zusammenhänge der Messungen bekannt sind. Hierauf basierend ist es auch möglich die Messungenauigkeiten von geeichten Radarmessungen $\sigma_{RI,Radar,geeicht}$ zu bestimmen;

   ○ nachstehend kann das erste Messverfahren auch als erste Messung bezeichnet werden;

• Messen der Luftbestandteile in dem Gebiet mittels eines zweiten Messverfahrens, wobei das zweite Messverfahren auf einer ersten Auswahl von Messparametern einer Dämpfungsmessung von Telekommunikationssignalen in dem Gebiet basiert, wobei die Messung des zweiten Messverfahrens als Ergebnisse einen Absolutwert der Luftbestandteile $RI_{Tele}$ und/oder einen Messfehler des Absolutwerts der Luftbestandteilen $\sigma_{RI,Tele}$ für Messpunkte des Gebiets ergibt;

   ○ die Dämpfungsmessung von Telekommunikationssignalen können auch als CML- Messungen bezeichnet werden;

   ○ die Mess-Einheiten für die Dämpfungsmessung der Telekommunikationssignale sind insbesondere die Basisstationen der Mobilfunkanbieter, wobei die Basisstationen eingerichtet sind, Telekommunikationssignale mit einer Frequenz von mehr als 1 GHz zu versenden, insbesondere weisen Telekommunikationssignale des 5G Standards (oder zukünftige Standard) diese Eigenschaft auf.

   ○ Die Telekommunikationssignale können eigens für das zweite Messverfahren generiert und versendet werden. In diesem Fall sind sie nicht durch die Eigenschaften herkömmlicher Telekommunikationssignale beschränkt, sodass sie beispielsweise eine Nachricht o. ä. aufweisen müssen. Es ist allerdings auch möglich, Telekommunikationssignale, die im laufenden Betrieb zur Kommunikation (insbesondere zwischen zwei Nutzern oder zwischen einem Nutzer und einem Service) verwendet werden für die Dämpfungsmessung zu verwenden. Dies hat den Vorteil, dass zumindest auf Senderseite keine zusätzlichen Kapazitäten im Vergleich zum normalen Gebrauch der Basisstation verwendet werden müssen;

   ○ nachstehend kann das zweite Messverfahren auch als zweite Messung bezeichnet werden;

Es ist nun eine Kernidee der Erfindung, dass die Ergebnisse des ersten Messverfahrens und des zweiten Messverfahrens miteinander funktional, beispielsweise in der Form eines gewichteten Mittelwerts kombiniert werden, um einen kombinierten Absolutwert der Luftbestandteile $RI_{Radar-Tele}$ und/oder einen kombinierten Messfehler des Absolutwerts der Luftbestandteilen $\sigma_{RI,Radar-Tele}$ zu berechnen.

Dies hat den Vorteil, dass sich das erste und das zweite Messverfahren synergetisch ergänzen. Das erste Messverfahren hat den Vorteil, dass es quasi lückenlos Messdaten erhebt, wobei das zweite Messverfahren lediglich Messdaten entlang der Sichtlinie ("Line of sight") der beteiligten Mess-Einheiten, insbesondere der beteiligten Basisstation, ergibt. Auf der anderen Seite weist das zweite Messverfahren in der Regel Messdaten mit einer deutlich besseren Genauigkeit als das erste Messverfahren auf, wobei zusätzlich die Möglichkeit besteht die Messparameter des zweiten Messverfahrens flexibel zu wählen, um eine gewünschte Genauigkeit zu erzielen. Die Kombination des Absolutwerts und/oder der Messfehler des Absolutwerts der Luftbestandteile $\sigma_{RI,Radar-Tele}$, halt also den Effekt, die Genauigkeit der Messung in einem lückenlosen Messgebiet zu verbessern und berechnen zu können. Insbesondere kann die Messung durch die Auswahl der entsprechenden Messparameter so angepasst werden, dass eine vorgegebene Genauigkeit erreicht wird. Dies ist insbesondere dann vorteilhaft, wenn Nutzer festlegen, dass beispielsweise eine Regenprognose eine bestimmte Genauigkeit aufweisen muss. Dies ist vorteilhaft für viele Anwendungsfelder, bei denen es wichtig ist zu wissen, wie viel Regen tatsächlich zukünftig fallen wird. Wie schon gesagt, gelten diese Aussagen auch für eine Prognose anderer Luftbestandteile wie beispielsweise Schadstoffe etc.

In einer bevorzugten Ausgestaltung der Erfindung umfassend die Messparameter, insbesondere die Messparameter der ersten oder einer weiteren Auswahl, des zweiten Messverfahrens

• Eine Frequenz des Telekommunikationssignals,

   ○ hierbei ist es insbesondere möglich, dass eine Basisstation oder verschiedene Basisstationen auch verschiedene Frequenzen für das Telekommunikationssignal verwenden. Insbesondere dann, wenn die zweite Messung für verschiedene Gebiete verschiedene Genauigkeiten aufweist. In der Regel wird die Frequenz so angepasst, dass eine geforderte Genauigkeitsvorgabe möglichst "passend" erfüllt wird. Eine "zu genaue" Messung führt nämlich in der Regel zu einem erhöhten Verbrauch von Ressourcen;

   ○ bevorzugt weisen die Frequenzen mehr als 5 GHz, bevorzugt mehr als 15 GHz, besonders bevorzugt mehr als 50 GHz auf. Je höher die Frequenz ist, desto besser ist sie in der Lage auch geringe Mengen an Regentropfen in der Luft durch die entsprechenden Dämpfungsmessungen zu erfassen. Beispielsweise ist eine Frequenz von ab 15 GHz in der Lage eine Regenintensität von 0,25 mm/h aufzulösen, wohingegen einer Frequenz von 5 GHz "nur" in der Lage ist Regenmengen ab 25 mm/h aufzulösen.

- Messdauer,

  ◦ in der Regel gilt, dass eine höhere Messdauer zu einer erhöhten Genauigkeit der Messung führt. Auch die Messdauer wird entsprechend angepasst, sodass die Anforderungen an die Genauigkeit möglichst passend erzielt werden. Eine zu hohe Messdauer wäre nämlich wiederum eine Verschwendung von Ressourcen.

  ◦ Typische Messdauern für die Dämpfungsmessungen sind 1 Minute bis 5 Minuten.

- Art der Messeinheiten;

  o als Mess-Einheiten für die zweite Messung können (vorhandene) Basisstationen der Mobilfunkanbieter und/oder UEs mit einem Mobilfunkmodul, wie etwa Smartphones oder Autos verwendet werden. Basisstation haben den Vorteil, dass sie an bekannten Orten aufgestellt sind und insbesondere diejenigen Basisstationen verwendet werden können von den bekannt ist, dass sie untereinander eine freie Sicht aufeinander, ungestörte "Line of Sight", aufweisen. Dies hat den Vorteil, dass die Messstrecke (Ort der Basisstation ist bekannt) bekannt ist und die Messsignale nicht durch unbekannte Gegenstände oder dergleichen gedämpft werden. Weisen die entsprechenden Messungen einen plötzlichen starken Abfall der Stärke der Messsignale auf, ist es wahrscheinlich, dass ein Gegenstand, wie etwa ein Vogel, kurzfristig die Sichtlinie gestört hat. Gegebenenfalls kann ein Algorithmus vorhanden sein, der entsprechenden Messungen, beispielsweise beim plötzlichen Abfall des Messsignals von mehr als 10 %, aussortiert. Es ist insbesondere möglich, die Basisstationen verschiedener Mobilfunkanbieter miteinander zu kombinieren, da auf diese Art und Weise in der Regel kürzere Messstrecken als auch eine flexiblere Auswahl dieser Messstrecken erzielt werden kann. Durch die Verwendung der entsprechenden UEs mit Mobilfunkmodul können die Messstrecken noch flexibler ausgestaltet werden. Hierbei muss allerdings der Auswerte-Algorithmus eingerichtet sein, detektieren zu können, ob die Dämpfung lediglich durch die Luftbestandteile verursacht wurde, also insbesondere, ob eine freie Sicht zwischen Sender und Empfänger des Telekommunikationssignals möglich ist. Die Messeinheiten sind insbesondere eingerichtet die Ergebnisse der Messung an einen Mess-Server weiterzuleiten, wobei der Mess-Server prinzipiell auch auf einer Basisstation implementierbar ist;

- Anzahl der Messeinheiten;

  o eine Erhöhung der Anzahl der Messeinheiten führt in der Regel zu einer besseren Genauigkeit der Messung, aber auch zu einem erhöhten Verbrauch von Ressourcen. Die Anzahl wird demnach so ausgewählt, um den Genauigkeitsanforderungen möglichst genau zu entsprechen.

- Position der Messeinheiten, und/oder

  o hierbei kann die erste Auswahl beispielsweise vorsehen, dass die Position der Messeinheiten möglichst gleichmäßig über das zu vermessende Gebiet hinweg verteilt ist. Insbesondere kann eine lokale Erhöhung bzw. Veränderung der Positionen der Messeinheiten die Genauigkeit der Messung verändern. Insbesondere können diejenigen Messeinheiten entfernt werden, von den festgestellt wird, dass diese keine ungestörte Sichtlinie zu einer anderen Messstation aufweisen.

- Messlinien.

  ◦ Die Messlinien zwischen zwei Messeinheiten legen insbesondere eine Länge der Messstrecke der Dämpfungsmessung fest. In der Regel gilt, dass je länger die Messstrecke ist, eine umso größere Ungenauigkeit ergibt sich für die Dämpfungsmesswerte. Die Messlinien können also so ausgewählt werden, dass deren Messstrecke möglichst kurz ist, um die Genauigkeit zu verbessern.

In einer Ausführungsform werden die Messeinheiten die unterschiedlichen Mobilfunkanbietern zugeordnet sind für die zweite Messung kombiniert. Dies hat insbesondere den Vorteil, dass die Messlinien bzw. die Messstrecken der zweiten Messung flexibler auswählbar sind, da in der Regel die Messeinheiten unterschiedlicher Mobilfunkanbieter näher zueinander angeordnet sind als die desselben Mobilfunkanbieters. Zudem wird der Ressourcenbedarf über mehrere Mobilfunkanbieter verteilt, was zur Stabilität der Netze beiträgt.

In einer bevorzugten Ausführungsform wird zumindest eine weitere Auswahl an Messparametern erstellt, wenn der berechnete kombinierten Messfehler des Absolutwerts der Luftbestandteile $\sigma_{RI,Radar-Tele}$ Zielvorgaben nicht genügt und/oder zu gut ist. Die Zielvorgaben können insbesondere von Nutzern über eine entsprechend eingerichtete Schnittstelle, beispielsweise ein Internetportal, bekannt gemacht werden. Ist der berechnete kombinierte Messfehler zu schlecht, würde die entsprechende Prognose der Regenwahrscheinlichkeit für Nutzer nicht "gut genug" sein. Der Mess-Server kann dann eine andere Auswahl Messparameter erstellen und überprüfen ob diese Auswahl nun den Zielvorgaben genügt. Diese "Feedbackschleife" kann so lange durchgeführt werden bis die Genauigkeit der Zielvorgaben genügt und dann kann die eigentliche Messung gestartet werden. Eine weitere Auswahl kann überraschenderweise aber auch dann vorgenommen werden, wenn die Vorhersage "zu gut ist". Dies hat den Vorteil, dass in diesem Fall nicht unnötigerweise Hardwareressourcen benutzt werden, die zum Erreichen der Zielvorgabe gar nicht benötigt werden. Dies ist insbesondere im Hinblick darauf sinnvoll, dass die Basisstationen sonst weniger Kapazität für ihre eigentliche Aufgabe, nämlich dem Bereitstellen von Kommunikationsverbindungen, aufweisen würden. Es ist also möglich, die Zielvorgabe insbesondere in der Form eines Bereichs anzugeben, indem die Genauigkeit liegen soll, also beispielsweise $Wert_1 < \sigma_{RI,Radar-Tele} < Wert_2$. Eine Verbesserung der Genauigkeit kann insbesondere durch eine Erhöhung der Frequenz, eine Verdichtung der Messlinien und/oder eine Erhöhung der Messdauer erzielt werden. Eine Erniedrigung der Genauigkeit kann insbesondere durch eine Erniedrigung der Frequenz, der Dichte der Messlinien und/oder eine Verminderung der Messdauer erzielt werden.

In einem bevorzugten Ausführungsbeispiel wird für die erste und/oder die weitere Auswahl eine Auslastung der Messeinheiten, insbesondere der Basisstationen, berücksichtigt.

Dieses Merkmal hat den technischen Effekt, dass der Normalbetrieb der Basisstationen möglichst wenig beeinträchtigt wird und dass sichergestellt werden kann, dass die Basisstation durch die zusätzlichen Dämpfungsmessungen nicht überbelastet werden. Insbesondere können hierzu auch Historiedaten verwendet werden, die angeben, zu welchen Zeiten, welche Basisstation besonders stark ausgelastet ist. Es ist beispielsweise auch möglich, dass die Aufgaben der Basisstation mit verschiedenen Prioritäten abgearbeitet werden, wobei die Priorität der Dämpfungsmessung höher oder niedriger als die entsprechende von Kommunikationsverbindungen gewählt werden kann.

Vorzugsweise wird die erste Auswahl oder die weitere Auswahl an Messparametern zumindest teilweise mittels einer künstliche Intelligenz, mittels einer Simulationen, mittels Expertenwissen, mittels Zufall und/oder einem Gleichverteilungsgrundsatz erstellt.

Eine künstliche Intelligenz ist besonders gut zur Mustererkennung geeignet. Ein solches Muster kann eben auch die Auswahl der Messparameter für die Dämpfungsmessung sein. Das der künstlichen Intelligenz zu Grunde liegende neuronale Netzwerk kann trainiert werden, indem ihm als Trainingsdaten verschiedene Messparameter übergeben werden, die durch ihre entsprechenden Messgenauigkeiten gekennzeichnet sind. Dies ermöglicht es, dem trainierten neuronalen Netzwerk eine gewünschte Genauigkeit vorzugeben, sodass dieses die entsprechende erste Auswahl trifft. Da die Standorte der Basisstationen, die funktionalen Zusammenhänge etc. bekannt sind, kann die erste Auswahl auch durch eine Simulation ermittelt werden. In der Regel dürften der Ressourcenaufwand und die Flexibilität der künstlichen Intelligenz besser sein als die der Simulation, die jedes Mal eine neue Rechnung durchführen muss. Die erste Auswahl auf einem Zufall basieren zu lassen, hat insbesondere den Vorteil, dass hierdurch völlig neue Sets von Parametern miteinander kombiniert werden, die auch zu überraschenden/neuen Ergebnissen bezüglich der resultierenden Genauigkeit führen können. Gerade die Ergebnisse einer solchen Zufallsauswahl können wiederum verwendet werden, um das neuronale Netzwerk besser zu trainieren. Der Gleichverteilungsgrundsatz basiert auf der Erkenntnis, dass eine gleichverteilte Erhöhung der Dichte der Messeinheiten generell zu einer besseren Genauigkeit führt. Insbesondere für noch unbekannte Gebiete oder neue Messanforderung, kann es vorteilhaft sein die Auswahl durch einen Experten vornehmen zu lassen.

In einer bevorzugten Ausführungsform der Erfindung werden die Ergebnisse des ersten Messverfahrens und des zweiten Messverfahrens an übereinstimmenden Positionen jeweils mittels eines dritten Messverfahrens geeicht, wobei die Ergebnisse an den übereinstimmenden Positionen miteinander kombiniert werden. Das dritte Messverfahren kann insbesondere eine Messung mit Auffangbehälter, im Fall von Regen, oder von lokalen Messstationen für die Luftbestandteile sein. Insbesondere im Fall von Luftverschmutzungen, sind solche Messstationen häufig an Straßen vorzufinden und bekannt. Durch die entsprechenden Eichmessungen sowohl der Absolutwerte als auch der Ungenauigkeiten wird ermöglicht, dass eine kombinierte Auswertung der Ergebnisse der ersten und der zweiten Messung möglich ist. Ansonsten wäre es, wie wenn man Äpfel mit Birnen vergleicht.

Vorzugsweise werden die Ergebnisse des zweiten Messverfahrens, insbesondere für die übereinstimmenden Positionen, durch Extrapolation und/oder Interpolation, insbesondere basierend auf den Ergebnissen des ersten Messverfahrens, berechnet. Diese Extrapolation bzw. Interpolation kann auf dem sogenannten Kriging basieren, wobei die ungeeichten Radarmessungen verwendet werden können, um die ungeeichten Dämpfungsmessungen des Telekommunikationsverfahrens zu extrapolieren bzw. zu interpolieren. Dies ist in der Regel vorteilhaft, da eben die Messwerte des zweiten Messverfahrens nur entlang der Sichtlinie zwischen den beteiligten Basisstationen vorhanden ist.

Bevorzugt werden die Ergebnisse des ersten Messverfahrens zu elliptischen Flächen erweitert, deren Brennpunkte auf der Messlinie oder der Verlängerung der Messlinie der jeweiligen Messeinheit der Telekommunikationsmessung liegen. Solche elliptischen Flächen haben sich als besonders vorteilhaft erwiesen, um die entsprechenden Regenprognosen treffen zu können. Insbesondere haben solch elliptischen Flächen den Vorteil, dass sie mathematisch exakt zugänglich sind und dass demnach ihre Genauigkeit analytisch berechnet werden kann.

In einer bevorzugten Ausführungsform wird die zweite Messung vorgenommen, wenn durch eine Aneichung der Messwerte der zweiten Messung eine Verbesserung der Genauigkeit im Vergleich zur der alleinigen ersten Messung erzielt wird, insbesondere, wenn gilt: $\sigma_{RI,Radar,geeicht} - \sigma_{RI,Radar-Tele,geeicht} > 0$.

Dies hat den Vorteil, dass das zweite Messverfahren nur dann ausgeführt wird, wenn es zu einer Verbesserung der Messergebnisse beiträgt.

In einer bevorzugten Ausführungsform wird die zweite Messung für Gebiete mit $RI_{Radar} = 0$ oder $RI_{Radar}$ ausreichend klein nicht geplant und/oder nicht durchgeführt.

In diesem Fall schließt man nämlich aufgrund der Ergebnisse der ersten Messung, dass entweder gar kein Regen für dieses Gebiet oder so wenig Regen für dieses Gebiet zu erwarten ist, dass sich gewissermaßen gar nicht lohnt, das zweite Messverfahren für diese Gebiete zu starten, insbesondere auch, weil die entsprechenden Frequenzen dann sehr hoch gewählt werden müssten, was einen erhöhten Energiebedarf zu Folge hat.

Insbesondere können für eine Ermittlung einer Prognose von $RI_{Radar} = 0$ Windrichtungsdaten verwendet werden. Dies hat den Vorteil, dass auf Basis der Windrichtungsdaten berechnet werden kann, ob überhaupt ein Regengebiet in das Gebiet einzieht. Ist dies nicht der Fall, so ist auch in Zukunft nicht damit zu rechnen, dass $RI_{Radar} > 0$ gilt.

Gemäß einem zweiten Aspekt der Erfindung ist ein Mess-Server zur Bestimmung von Luftbestandteilen, insbesondere von Regen, in einem Gebiet angegeben. Der Mess-Server ist also zumindest teilweise eingerichtet, um die Schritte des vorstehend beschriebenen Verfahrens auszuführen. Insbesondere kann hierzu ein entsprechender Messalgorithmus auf dem Mess-Server implementiert sein. Weiterhin weist der Mess-Server folgende Eigenschaften auf:

- wobei der Mess-Server eingerichtet ist Ergebnisse eines ersten Messverfahrens basierend auf Radarmessungen zur Messung der Luftbestandteile in dem Gebiet zu erhalten, wobei die Messung des ersten Messverfahrens als Ergebnis einen Absolutwert der Luftbestandteile $RI_{Radar}$ und/oder einen Messfehler des Absolutwerts der Luftbestandteile $\sigma_{RI,Radar}$ für Messpunkte des Gebiets ergibt;

  o der Mess-Server kann die Ergebnisse des ersten und/oder des zweiten Messverfahrens durch entsprechende Schnittstellen erhalten; ebenso kann der Mess-Server die Zielvorgaben über eine entsprechende Schnittstelle, die insbesondere eine Anbindung an ein Internetportal aufweist, welches für Nutzer zugänglich ist, erhalten;

- wobei der Mess-Server eingerichtet ist Ergebnisse eines zweiten Messverfahrens zur Messung der Luftbestandteile in dem Gebiet zu erhalten, wobei das zweite Messverfahren auf einer ersten Auswahl von Messparametern einer Dämpfungsmessung von Telekommunikationssignalen in dem Gebiet basiert, wobei die Messung des zweiten Messverfahrens als Ergebnisse einen Absolutwert der Luftbestandteile $RI_{Tele}$ und/oder einen Messfehler des Absolutwerts der Luftbestandteile $\sigma_{RI,Tele}$ für Messpunkte des Gebiets ergibt,

Es ist eine Kernidee der Erfindung, dass der Mess-Server eingerichtet ist, die Ergebnisse der ersten und der zweiten Messung miteinander zu kombinieren und/oder die erste Auswahl von Messparametern der Dämpfungsmessung von Telekommunikationssignalen zu erstellen. Die Kombination der ersten und der zweiten Messung kann insbesondere dazu verwendet werden eine Regenprognose und/oder eine Aussage über die Genauigkeit der Regenprognose zu erstellen.

Die erfindungsgemäßen Vorteile, die mit dem Mess-Server erzielbar sind, sind im Wesentlichen analog mit denen des vorstehend beschriebenen Verfahrens. Insbesondere ist der Mess-Server auch eingerichtet, um die bevorzugten Ausgestaltungen des Verfahrens auszuführen. Insbesondere weist der Mess-Server hierzu ein Computerprogramm auf, das den Code für den Messalgorithmus aufweist, um die Schritte des Verfahrens durchzuführen.

Gemäß einem dritten Aspekt der Erfindung ist ein System zur Bestimmung von Luftbestandteilen, insbesondere von Regen, in einem Gebiet angegeben, wobei das System aufweist:

- ein erster Typ Mess-Einheiten eingerichtet zur Durchführung eines ersten Messverfahrens, wobei das erste Messverfahren auf Radarmessungen in einem Gebiet basiert und als Ergebnis einen Absolutwert der Luftbestandteile $RI_{Radar}$ und/oder einen Messfehler des Absolutwerts der Luftbestandteilen $\sigma_{RI,Radar}$ für Messpunkte des Gebiets ergibt;

- ein zweiter Typ Mess-Einheiten eingerichtet zur Durchführung eines zweiten Messverfahrens, wobei das zweite Messverfahren auf einer ersten Auswahl von Messparametern einer Dämpfungsmessung von Telekommunikationssignalen in dem Gebiet basiert, wobei die Messung des zweiten Messverfahrens als Ergebnisse einen Absolutwert der Luftbestandteile $RI_{Tele}$ und/oder einen Messfehler des Absolutwerts der Luftbestandteile $\sigma_{RI,Tele}$ für Messpunkte des Gebiets ergibt;

- den vorstehend beschrieben Mess-Server.

Das System weißt im Wesentlichen dieselben Vorteile auf, die vorstehend im Zusammenhang mit dem erfindungsgemäßen Verfahren beschrieben wurden.

Gemäß einem vierten Aspekt der Erfindung ist ein Computerprogramm angegeben, umfassend Befehle, die bei der Ausführung des Programms durch einen Computer diesen veranlassen, das Verfahren nach Anspruch 1 auszuführen. Insbesondere erhält das Computerprogramm die Messergebnisse über Schnittstellen, kann die Messung auslösen und/oder die erste oder die weitere Auswahl an Messparametern festlegen.

Weitere vorteilhafte Ausgestaltungsmerkmale der vorliegenden Erfindung sind in den Patentansprüchen definiert.

Im Folgenden werden bevorzugte Ausführungsbeispiele der vorliegenden Erfindung unter Bezugnahme auf die begleitenden Figuren erläutert:

Fig. 1 illustriert die Erfindung anhand eines ersten Schaubildes;

Fig. 2 illustriert die Erfindung anhand eines zweiten Schaubildes, wobei sich das erste und das zweite Schaubild gegenseitig ergänzen;

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist. Merkmale der verschiedenen Ausführungsbeispiele sind also nicht so zu verstehen, dass diese zwingend in der offenbarten Kombination zu verwenden sind.

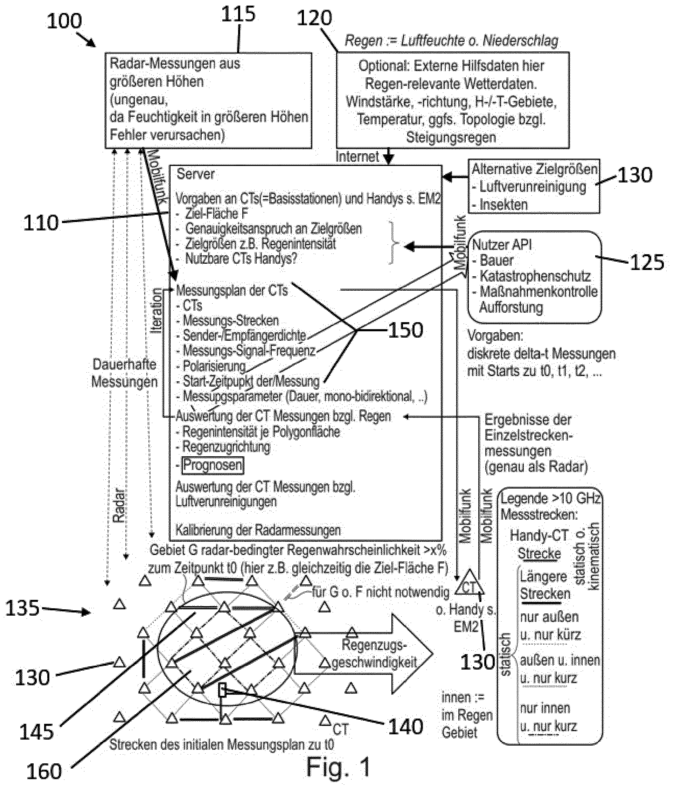

Nachstehend, wird die Erfindung zunächst im Zusammenhang mit Fig. 1 erläutert:
Die Messungen im Zusammenhang dieser Erfindung liefern Regenintensitäten, die auch als Regenraten bezeichnet werden können. Diese Regenintensitäten RI haben eine Dimension von Regenmenge pro Referenzzeiteinheit und Referenzfläche, also typischerweise $\left[\dfrac{L}{m^2 * s}\right]$, wobei L Liter bezeichnet. Hieraus kann dann natürlich auch eine Regenmenge RM [Liter] in bekannter Weise berechnet werden.

Radarmessungen liefern selbst für kleinste Flächenelemente, die positionsmäßig bekannt sind, die entsprechenden ortsaufgelösten RI Werte = RI (r). Hierbei bezeichnet r den entsprechenden Ortsvektor, der beispielsweise durch Höhen und Breitengrad sowie die entsprechende Höhe über der Erdoberfläche beschrieben werden kann.

Messungen mittels erdnahen elektromagnetischen Signalen mit bevorzugt mehr als 10 GHz basieren auf einer Messung einer mittleren Dämpfung des entsprechenden Signals über den gesamten Laufweg, insbesondere zwischen Sender und Empfänger. Die erdnahen elektromagnetischen Signale sind insbesondere Mobilfunklinks. Diese Dämpfung kann in bekannter Weise ebenfalls in die entsprechenden Regenintensitäten RI (r) umgerechnet werden, die in der Regel allerdings die Messung der Regenintensitäten in einer besseren Qualität widerspiegeln als die herkömmlichen Radarmessungen, insbesondere wenn die Messungen der elektromagnetischen Signale auf geringeren Laufwegen beruht als die der Radarmessungen. Sind Sender und Empfänger bei den Messungen der erdnahen elektromagnetischen Signale deutlich näher zueinander positioniert als bei den entsprechenden Radarmessungen, führt dies zu kürzeren Laufwegen, sodass die Messung der mittleren Dämpfung über den gesamten lauffähigen Weg deutlich besser die wirklichen Regenintensitäten widerspiegeln kann.

"H. Messer, A. Zinevich, and A. Pinhas, "Environmental monitoring by wireless communication net- works," Science, vol. 312, no. 5774, p. 713, 2006. [Online]. Available: https://science.sciencemag. org/content/312/5774/713" haben in diesem Zusammenhang durch Messungen gezeigt, dass die ermittelte Regenintensität von Messungen mittels der erdnahen elektromagnetischen Signale deutlich besser mit den Auffangbehälter an einem entsprechenden Bestimmungsort korreliert als die Vergleichsmessungen mittels der Radarmessung.

In diesem Zusammenhang beschreibt die vorstehende Veröffentlichung Messer et al. auch, dass die jahrelangen Forschungsarbeiten von Telekommunikationsspezialisten Instrumente zur Modellierung und Interpretation von atmosphärisch bedingten Beeinträchtigungen von Funkverbindungen hervorgebracht haben, wobei die Regenabschwächung von der Größe und Verteilung der Wassertröpfchen abhängen würde. Es gibt mehrere Modelle, die die Dämpfungsrate A (angegeben in dB/km) mit der Regenintensität in Beziehung setzen. Der gängige Ansatz ist ein Potenzmodell für die Dämpfung, $A = a * R^b$, wobei R die Regenrate ist und die Konstanten a und b Funktionen der Frequenz und der Polarisation sind. Ausgehend von den Messungen des empfangenen Signalpegels (RSL) konnte die regenbedingte Dämpfung A des Telekommunikationssignals und dann die durchschnittliche Regenrate über jeden Zeitrahmen geschätzt werden.

Als erfindungsgemäßer Sender und/oder Empfänger können beispielsweise Basisstationen eines Mobilfunknetzes verwendet werden. Diese Basisstation haben bekannte Koordinaten, sodass sich die Messung der entsprechenden Dämpfung der elektromagnetischen Telekommunikationssignale zwischen den Basisstationen auf die entsprechende Verbindungslinie der jeweiligen Stationen bezieht. Die Lage und die Länge dieser Verbindungslinien sind also prinzipiell bekannt, weshalb diese auch als statische Station bezeichnet werden kann. Mit den Höhenangaben der Sende- und Empfängereinheiten erhält man die 3D Raumstrecke für welche die RI Bestimmungen mittels Mobilfunk gelten. Die entsprechend vermessenen Flächen können lückenlos zu größeren Flächen zusammengefasst werden. Für eine weitere Verdichtung dieses mobilfunkbasierten Messsystems können zusätzlich noch bewegliche Telekommunikationseinheiten - auch als UEs (User Equipment) bezeichnet - als weitere Messeinheiten hinzugefügt werden. Solche UEs mit Mobilfunkmodul sind beispielsweise Smartphones, Autos, etc. Da eine Datenübertragung dieser UEs prinzipiell auch einen Rückschluss auf ihre örtliche Position zum Zeitpunkt der Kommunikation zulässt - beispielsweise indem Ortskoordinaten wie z.B. GPS Koordinaten übertragen werden - ist die Lage und der Länge dieser entsprechenden Verbindungslinien ebenfalls bekannt. Insbesondere können erfindungsgemäß die folgenden Telekommunikationsstandards verwendet werden: 5G, Beyond5G und/oder 6G Netze. In all diesen Standards ist es möglich Signale mit Frequenzen über 10 GHz auszutauschen, welche für das erfindungsgemäße Verfahren besonders vorteilhaft sind. Dem Fachmann ist bekannt, wie er aus diesem Dämpfungsmessungen die RI Werte (auch unter Zuhilfenahme weiterer Informationen wie z.B. der Temperatur auf den Laufwegen und/oder z.B. technischen Antenneneigenschaften und - witterungszuständen an den Antennen, wobei die Lufttemperaturen bisher bereits in den Basisstationen i.d.R. fortlaufend zur Qualitätsüberwachung der Mobilfunkkommunikation gemessen werden) der entsprechenden Flächenelemente ermitteln kann. Je kleiner die entsprechenden Flächenelemente ausfallen, desto höher ist die örtliche Auflösung RI(r).

Fig. 1 illustriert eine Messanordnung 100 eines ersten Schaubildes.

Zentral in der Mitte von Fig. 1 ist ein Mess-Server 110 gezeigt, der die Messung der RI Werte koordiniert und verschiedene Schnittstellen zur Kommunikation mit weiteren Systemen, Einheiten oder dergleichen aufweist.

Beispielsweise kann der Mess-Server 110 über eine Mobilfunkschnittstelle mit einem Radarmesssystem 115 kommunizieren, wobei das Radarmesssystem 115 dem Mess-Server 110 Radarmessungen, insbesondere aus den typischen großen Höhen, zur Verfügung stellen kann.

Eine externe Datenbank 120 kann beispielsweise über eine Internet Schnittstelle dem Mess-Server 110 weitere relevante Wetterdaten zur Verfügung stellen, wie beispielsweise Windstärke, Windrichtung, Hochdruckgebiete, Tiefdruckgebiete, Temperatur, und/oder Informationen zur Topologie der entsprechenden Gebiete.

Über eine erste Inputschnittstelle 125 können Nutzer, wie beispielsweise Bauern, und/oder Katastrophenschutz den Mess-Server 110 bezüglich eine Information und/oder eine Vorhersage der Regenintensitäten in gewünschten Gebieten RI(r) anfragen. Mittels dieser ersten Inputschnittstelle 125 können die Nutzer zudem eine gewünschte Genauigkeit der Messungen anfragen.

Da sich das erfindungsgemäße Verfahren, wie vorstehend schon angemerkt, nicht nur zur Bestimmung von Regen, sondern auch ganz allgemein für Aerosole und/oder auch andere Objekte wie Insekten eignet, kann über eine zweite Inputschnittstelle 130 die entsprechend gewünschte zu bestimmende Zielgröße (Regen, Aerosol "x", Insekten) definiert werden. Für Aerosole oder Insekten könnte beispielsweise für die Intensität die Dimension

$$\left[ \frac{Anzahl\ Insekten\ oder\ Partikel}{m^2 * s} \right]$$

verwendet werden. Im allgemeinen Fall wird jeder Zielgröße ein eigenes Dämpfungsmodell zugrunde gelegt. Beispielsweise dämpfen Insekten eine Mobilfunksignal anders als Regen. Die verschiedenen Modelle sind dem Fachmann bekannt oder er kann diese einfach ermitteln, indem er eine entsprechende Eichmessung der Telekommunikationssignale vornimmt, wobei eine vorher ermittelte und bekannte Menge beispielsweise an eine Aerosolen, das Telekommunikationssignal zwischen den bekannten Standorten eines Senders und Empfängers dämpft.

Der Mess-Server 110 weist eine weitere Schnittstelle, insbesondere eine Mobilfunkschnittstelle, zu den Basisstationen 130 eines Mobilfunknetzes 135 auf. Mittels dieser Schnittstelle können prinzipiell auch die vorgenannten UEs 140 mit dem Mess-Server 110 kommunizieren. Es ist gezeigt, dass die Basisstationen 130 ein Flächennetz aufbauen, wobei zwischen einigen ausgewählten Basisstationen 130 eine gestrichelte Doppellinie 145 gezeigt ist, die eine Messstrecke 145 für die Dämpfungsmessung eines Telekommunikationssignals anzeigt. Zwischen welchen Basisstationen 130 diese Messung vorgenommen wird, wird durch den Mess-Server 110 festgelegt auf dem ein entsprechender Mess-Algorithmus für die Messung implementiert ist.

Der Mess-Server 110 weist eine Datenbank auf in der entsprechende Vorgaben und/oder Informationstabellen hinterlegt sein können, die von dem Mess-Algorithmus verarbeitet werden können.

Die Informationstabellen weisen beispielsweise Lage und Eigenschaften der entsprechenden Basisstation auf und/oder die entsprechenden Dämpfungsmodelle für verschiedene Zielgrößen, etc.

Solche Vorgaben sind beispielsweise die Zielfläche für die die RI(r) zu bestimmen sind, eine Genauigkeitsvorgabe für die entsprechende Zielgröße, die Art der Zielgröße, Angaben der Frequenz, wie häufig gemessen werden soll, und/oder ob UEs ebenfalls als Mess-Einheiten verwendet werden können. Mess-Einheiten im Kontext dieser Erfindung sind also Basisstationen 130 und/oder UEs 140.

Der Mess-Algorithmus des Mess-Servers 110 ist eingerichtet, einen Mess-Plan 150 für die Mess-Einheiten 130, 140 zu erstellen. Also konkret, zwischen welchen Mess-Einheiten 130, 140 eine Dämpfungsmessung der Telekommunikationssignale vorgenommen werden soll, wie die Messstrecken auszuwählen sind, wie die Sender und/oder Empfänger festzulegen ist, mit welchem Zeitabstand gemessen werden soll, wie die Frequenz des Telekommunikationssignals gewählt werden soll (hierbei ist insbesondere auch möglich mit verschiedenen Frequenzen innerhalb eines Messzyklus zu messen), Start und/oder Endzeitpunkt der Messung, andere Messparameter, wie die Dauer der Messung oder ob mono oder bidirektional gemessen werden soll. Insbesondere bei einer zeitgleich stattfindenden bidirektionalen Messung kann ein großer Unterschied der Dämpfungswerte ein Hinweis auf ein mögliches Messproblem z.B. durch eine Empfangseinheit liefern.

Nach der Erstellung und der Ausführung dieses Messplans können die Ergebnisse ausgewertet werden und bei der Feststellung, dass die Messungen insbesondere noch nicht den Genauigkeitsanforderungen genügen, kann der Messplan iteriert werden, sodass die Genauigkeit der Messungen erhöht wird. Insbesondere ist dies möglich, wenn die Sender- und/oder Empfängerdichte erhöht wird.

Die Auswertung der Messungen kann die Regenintensitäten RI(r) pro Flächeneinheit, insbesondere pro Polygonfläche, eine Regenzugrichtung und/oder Prognosen umfassen. Wie vorstehend schon ausgeführt, sind auch Prognosen bezüglich Aerosolen beispielsweise von Luftverunreinigungen möglich.

Zusätzlich kann eine Kalibrierung der Radarmessungen mit den Ergebnissen der Telekommunikationssignalmessung durchgeführt werden, wobei die Radarmessungen in demselben Flächengebiet wie die Messungen mittels der Basisstation vorgenommen wurden.

Nochmals anders formuliert:
Somit kann der Mess-Server 110 aus Fig. 1 anhand von "groben" Radarmessungen für die RI(r) und ihren abschätzbaren Genauigkeiten sowie den Genauigkeiten einzelner potenzieller Dämpfungsmessungen auf Strecken den Mess-Plan 150 für potenzielle Mess-Einheiten 130, 140 festlegen, wobei für den Mess-Plan 150 die Lage, Dichte und Länge und Frequenz sowie Amplitude der Telekommunikationssignale festgelegt werden. (Die Polarisierung der Signale und/oder Lufttemperaturmessungen können für die Umrechnung auch bekannt sein). Der Mess-Server 110 legt den Mess-Plan 150 optional auch aufgrund einer ihm vorgegebenen Genauigkeit seiner Zielgrößen RI und/oder RM pro Fläche fest. Fläche und Genauigkeiten der Zielgrößen können von den potenziellen Nutzern vorgegeben sein.

Das Radarmesssystem 115 liefert seine RI-Genauigkeiten an den Mess-Server 110 und dieser entscheidet dann wo und wie er Mess-Pläne 150 für die statischen und kinematischen Mess-Einheiten 130, 140 erarbeitet und dass diese Pläne dann bei Bedarf an diese Mess-Einheiten 130, 140 weiterleitet werden, um dort ausgeführt zu werden. Die Messungen der Mess-Einheiten 130, 140 gehen umgehend oder gepuffert zurück an den Mess-Server 110 und dieser kann damit seinen Mess-Plan 150 überprüfen und ggfs. verbessern.

Der Mess-Server 110 kann auch von anderen Einheiten als dem Radarsystem Wetterinformationen bzgl. des Regens erhalten, z.B. die Lage von Tiefdruckgebieten und Windrichtungen und Windstärken, wodurch er Informationen erhält, in welcher Richtung der Mess-Plan 150 erweitert werden kann.

Der Mess-Server 110, bzw. der Algorithmus, kann ein Temperaturmodell aufweisen, da die entsprechenden Dämpfungswerte der Telekommunikationssignale auch von der Temperatur entlang des Laufwegs abhängen können. Alternativ können die Basisstationen die Außentemperaturen messen und bei der Berechnung von RI berücksichtigen. Ebenfalls alternativ können Umweltbedingungen überwacht werden, die die Sende- und/oder Empfangseinheiten bzgl. RI-Auswertungen beeinflussen, so z.B. Vereisungen der Empfangseinheiten, und bei der Berechnung von RI berücksichtigt werden.

Das Messverfahren kann insbesondere voll automatisiert ablaufen.

Die Messungen des Radarmesssystems 115 können zudem durch die Messungen der Telekommunikationssignale an übereinstimmenden Orten dynamisch neu kalibriert werden. Hierbei kann sich die Kalibrierung im Wesentlichen auf die oberen Schichten und deren verfälschenden Einfluss ziehen.

Beispielhaft soll nachfolgend ein möglicher Mess-Plan 150 beschrieben werden: Eine Auswahl der Mess-Einheiten 130, 140 eines Gebietes mit einer Radarregenwahrscheinlichkeit von größer x % sendet an ihre vier nächsten Mess-Einheiten 130, 140 entsprechende Telekommunikationssignale eingerichtet zur Dämpfungsmessung von RI-Messungen. Die RI-Messungsdaten und die Ortskoordinaten (Anfangs- und Endpunkte oder deren Koordinaten) werden dem Mess-Server 110 übermittelt, der darauf basierend RI mit der dazugehörigen Standardabweichung mit Hilfe das Algorithmus berechnet. Der Wert der Standardabweichung ist ein Maß für die Genauigkeit der Messung. Ist diese Genauigkeit nicht ausreichend, so ermittelt der Mess-Server 110 zusätzlich zu messende Messstrecken 145, um die gewünschte vorgegebenen Genauigkeit erhalten zu können. Diese Informationen gehen z.B. per Mobilfunk an die relevanten Mess-Einheiten 130, 140. Der neue Mess-Plan 150 wird durchgeführt und die Messungen werden vom Mess-Server 110 wieder auf die Zielerfüllung hin geprüft. Da die RI(r)-Werte aus Dämpfungsmessungen der Telekommunikationssignale genauer sind als die korrespondierenden RI(r)-Werte aus Radarmessungen, kann basierend auf den Dämpfungsmessungen der Telekommunikationssignale festgelegt werden, welche Strecken zukünftig "vermehrt" oder "vermindert" häufig gemessen werden sollen - das kann auch abhängig von der Windrichtung sein, also in welche Richtung ein Regengebiet zieht.

Besonders vorteilhaft können die Radarmessungen mit den Dämpfungsmessungen der Telekommunikationssignale kombiniert werden. Hierbei werden die Vorteile beider Methoden in einer Art kombiniert, dass deren jeweiligen Nachteile (zumindest größtenteils) eliminiert werden können. RI Messungen der Telekommunikationssignale werden nachstehend als $RI_{Tele}$ und RI Messungen der Radarmessgeräte werden nachstehend als $RI_{Radar}$ bezeichnet. Die Mess-Einheiten 130, 140 des Mobilfunknetzes 135 messen die $RI_{Tele}$ Werte entlang ihrer Line of Sight zwar genauer als es die Radarmethode vermag, aber eben nicht lückenlos bezüglich einer Fläche. Die Radarmessgeräte messen die Werte $RI_{Radar}$ zwar lückenlos innerhalb der durch die "Line of Sight" der die Mess-Einheiten 130, 140 begrenzten Flächenbereiche, aber mit einer geringeren Genauigkeit. Eine Kernidee ist es also, die erhöhte Genauigkeit der $RI_{Tele}$ Messungen zu verwenden, um die der $RI_{Radar}$ zu verbessern.

Insbesondere können die Radarsignale beispielsweise ein Gebiet erst einmal grob abtasten, wobei der Messplan 110 dann vorgibt in welchen Bereichen quasi zusätzlich die genauere Dämpfungsmessung der Telekommunikationssignale durchgeführt werden soll, um einen möglichst genauen Wert von RI(r) in bestimmten Gebieten zu erhalten. Durch eine a priori ausreichend gute Eichung der Radarmessung an diesen entsprechenden Stellen, können diese (zukünftig) insgesamt bessere Ergebnisse liefern. Diese a priori Eichung hat aber bzgl. der Genauigkeit eine natürliche Grenze, da die Eichparameter von der Kenntnis der unterschiedlichen Luftpartikelgrößen (z.B. Regen Tröpfchengrößen) und deren Verteilungen abhängig sind, die a priori nicht bekannt sind. Aus diesem Grund liefern Aneichungen mit zeitgleichen Messungen wahrer Absolutwerte (wenn vorliegend z.B. aus Regenauffangbehältern) von RI bessere Eichwerte für die RI Werte aus Dämpfungsmessungen Die Messdauer zwischen den Mess-Einheiten 130, 140 könnte beispielsweise 5 Minuten betragen, wobei sich der hierbei berechnete Messwert als Mittelwert oder Median der verschiedenen Einzelmessungen innerhalb der 5 Minuten ergeben könnte. Insofern könnte in etwa alle 5 Minuten ein aktualisierter Mess-Plan 150 von dem Mess-Server 110 generiert werden.

Soll als mögliche Zielgröße nicht der Regen, sondern die vorstehend schon erwähnten Aerosole oder Insekten bestimmt werden, liegt in der Regel kein Beitrag von entsprechenden Radarmessungen vor, in diesem Fall kann der Mess-Server 110 auch andere Quellen für den Datensatz bezüglich der "weniger genauen Messungen" hinzuziehen, beispielsweise historische Daten aus der Vergangenheit, sodass spezifische Ereignisse wie beispielsweise eine Rushhour berücksichtigt werden können. Für die Messung von Feinstaubpartikeln können insbesondere an den Bodenstationen entsprechende Sensoren angebracht werden, um repräsentativere Messungen durchführen und diese mit den Dämpfungsmessungen vergleichen zu können.

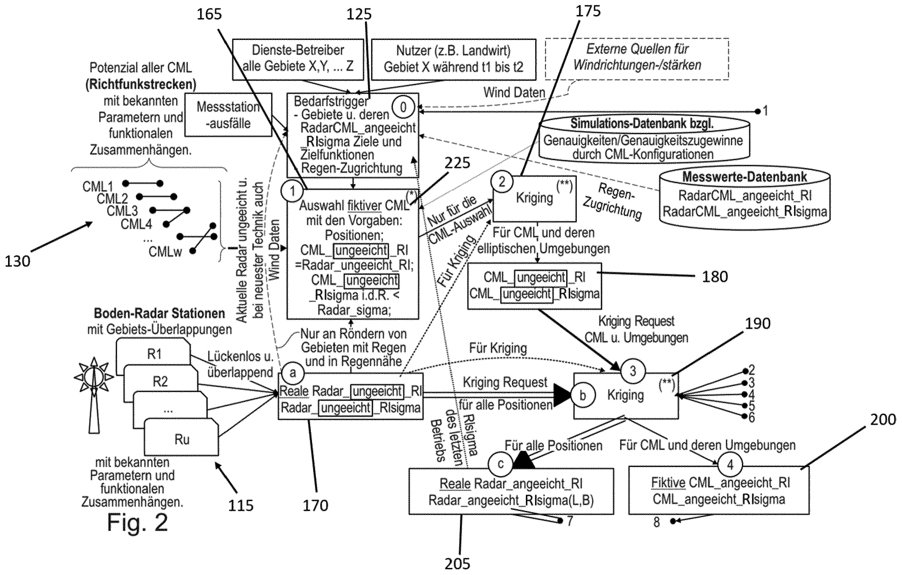

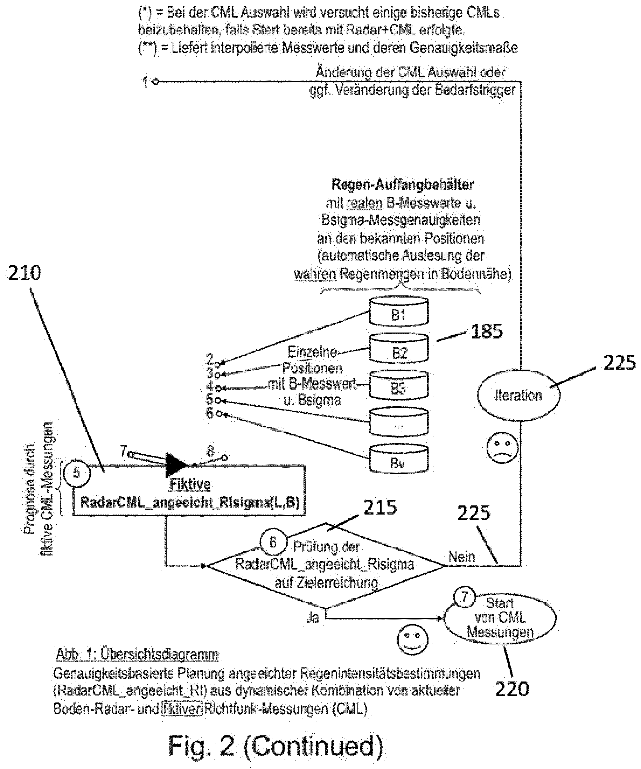

Für viele Anwendungen ist es nun ein wichtiger Aspekt, dass die Messung der Regenintensität eine gewünschte Genauigkeit aufweist, damit sich die Nutzer auch auf die Vorhersage verlassen können. Hierzu ist es wichtig, die Parameter der Mess-Einheiten 130, 140 im Hinblick auf diese Zielvorgaben entsprechend anzupassen. Dies ist ein weiterer Aspekt der Erfindung, der insbesondere im Zusammenhang mit der Fig. 2 beschrieben wird.

Zunächst sollen aber an dieser Stelle nochmals die Hintergründe und der Stand der Technik auf dem Gebiet beschrieben werden.

Eine Aneichung bzw. eine Kalibrierung der Radarmessungen und der Dämpfungsmessungen der Telekommunikation-Signale (CML- Messungen) kann durch den Abgleich mittels der Auffangbehälter (auch als Pluviometer oder Ombrometer bezeichnet) durchgeführt werden. Hierbei wird angenommen, dass die Auffangbehälter an ihren jeweiligen Positionen die korrekte Regenintensität angeben. Gegenwärtig ist dies die gängigste Aneichungsmethode. Eine mögliche Messmethode der Auffangbehälter ist, dass entweder zum Beispiel die Höhe der aufgefangenen Wassersäule gemessen wird, oder deren Volumen oder Gewicht bestimmt wird. Entsprechende Automatisierungen sind möglich.

Prinzipiell sind verschiedene Methoden zur Bestimmung der Regenintensität bekannt, bei denen keine Aneichung durchgeführt wird, wenn es allerdings darum geht die korrekte Regenintensität zu bestimmen, sind diese Methoden problematisch. Hauptsächlich sind die Fehler dieser Methoden darin begründet, dass die Größe der Wassertröpfchen, deren Häufigkeit und deren Verteilung unbekannt sind, sodass die entsprechende Aneichung - auch einfach nur als Eichung bezeichnet - notwendig ist, um die korrekten Regenintensitäten zu bestimmen. Aufgrund der hohen zeitlichen Variabilität der entsprechenden Messwerte, empfiehlt es sich den Messwert der Regenintensität RI als Mittelwert über einen vorgegebenen Zeitraum von mehreren Minuten bis zu mehreren Stunden zu bestimmen. In der Regel ist es zudem gewünscht, die RI Werte für größere Flächen zu bestimmen, wobei diese größeren Flächen vorab in kleinere Flächeneinheiten (beispielsweise eines $1 \times 1 \text{ km}^2$) untergliedert werden können, für die dann die Werte der Regenintensität möglichst genau erhoben werden sollen.

Wie schon erwähnt, um die tatsächlich in Bodennähe gefallene Regenmenge zu bestimmen, eignet sich zum Eichen eine zeitlich parallele Referenzmessung mittels der Auffangbehälter. Nach dem Auffangen der Regenmenge, kann die tatsächliche Regenintensität direkt ermittelt werden. Die Methode mittels der Auffangbehälter hat aber den Nachteil, dass sie sehr Zeit und kostenintensiv ist und vor möglichen Fehlereinflüssen geschützt werden muss, da - speziell in urbanen Gebieten - die Messfehler aufgrund von nicht beachteten Hausabschattungen, Temperatur und Wind in Summe bis zu 30 % betragen können. Aus diesen Gründen werden die Auffangbehälter an wohldefinierten Orten vorgesehen, um die entsprechenden Fehler zu minimieren, sodass die gemessenen Regenintensitäten als Referenz dienen können. In ganz Deutschland existieren aktuell ca. 1400 dieser Auffangbehälter an gut verteilten repräsentativen Stellen.

Da aber insbesondere die Messwerte der Radarmessungen und/oder der Dämpfungsmessungen der Telekommunikations-Signale an Position vorliegen können, an denen keine Auffangbehälter vorgesehen sind, müssen die entsprechenden Werte der Auffangbehälter auf die entsprechenden Messpunkte übertragen werden. Hierzu kann das in der Geostatistik bekannte Verfahren des "Kriging" verwendet werden. Unter Kriging (oder auch: Krigen) versteht man ein geostatistisches Verfahren, mit dem man Werte an Orten, für die keine Stichprobe vorliegt, durch umliegende Messwerte interpolieren oder auch annähern kann. Außerhalb der Geostatistik ist das Verfahren als Gaußprozess-Regression bekannt. Das Kriging Verfahren wird als Standardmethode verwendet, wenn noch ungeeichte RI-Werte an Position geeicht werden sollen, für die keine Referenzmessung existiert. Eine ebenfalls bekannte Verbesserung des Kriging Verfahrens ist das sogenannte "CoKriging", welches, sofern die notwendigen Zusatzinformationen zu Covarianz-Matrizen zusätzlicher Variablen vorliegen, erfindungsgemäß genutzt werden kann.

Beim Kriging bezüglich der Regenintensitäten können bei den durchgeführten Interpretationen und Extrapolationen auch die lückenlosen Niederschlagsdaten aus aktuellen, insbesondere ungeeichten, radarbasierten oder satellitenbasierten Methoden verwendet werden. Konkret auf den Fall der vorliegenden Erfindung übertragen, sind dies die ungeeichten Radarmessungen, da diese die aktuellen Nachbarschaftsbeziehungen zwischen den Messstellen der Auffangbehälter am besten beschreiben. Diese aktuell vorliegenden realen lokalen Nachbarschaftsbeziehungen sind Zusatzinformationen, um bessere Interpolationswerte zu ermitteln - insbesondere unter der Annahme, dass die Radarmessungen an den verschiedenen Orten ausreichend genau den gleichen Fehler aufweisen. Für das Kriging gemäß der Erfindung werden nicht die geeichten Radarwerte genutzt, da in diesem Fall die Werte der Auffangbehälter quasi doppelt verwendet werden würden, da diese als Basis für die Eichung der Radarwerte dienen.

Dem Fachmann ist aus der Literatur bekannt wie eine Aneichung von Dämpfungsmessungen der Telekommunikation-Signale oder der Radarmessungen basierend auf den entsprechenden Referenzwerten mittels des Kriging durchgeführt werden kann. Als beispielhafte Literaturfundstellen seien hierzu erwähnt: "Gaugeadjusted rainfall estimates from commercial microwave links" von Martin Fencl et al., "Radar rainfall error variance and its impact on radar rainfall calibration" von Siriluk Chumchean et al., "Geostatistical merging of rain gauge and radar data for high temporal resolutions and various station density scenarios" von Christian Berndt et al., und "An improved statistical approach to merge satellite rainfall estimates and raingauge data" von Ming Li et al.

Es ist ein Aspekt der Erfindung, dass die Genauigkeitsmaße - also die Fehlerangaben - der lückenlosen Daten Beachtung finden, die aus dem Kriging extrahiert werden. Ein Aspekt des erfindungsgemäßen Verfahrens bezieht sich also auf die Zielerreichung, dem Kriging der Messwerte und leitet dann aufgrund der bekannten funktionalen Zusammenhänge die Genauigkeitswerte der Messwerte ab und prüft diese Genauigkeiten im Hinblick darauf, ob die entsprechenden Zielvorgaben (also ob die Werte genau genug sind) erreicht werden.

Die Genauigkeiten bzw. die Fehler sind in der Regel von der Größe der Messwerte abhängig, und zudem von der Art der Funktion. Beispielsweise ist bei der Funktion z = (x+y)/2 die Genauigkeit von Z unabhängig von den Messwerten x und y und nur abhängig von deren Fehlern. - dies ist allerdings für den Statistiker im Rahmen der Gaußschen Fehlerfortpflanzung bekannt.

Aus den vorliegenden Radarinformationen kann geschlossen werden, ob die Absolutwerte von RI Messungen mit Werten größer als null in Teilgebieten lückenlos vorkommen. An jeder detektierten Lücke ist vorgesehen, dass das Kriging stoppt und nach der Lücke mit anderen Stützwerten aus einem anderen Teilgebiet mit Werten größer als null neu durchgeführt wird. Die Stützwerte sind dann Werte an einzelnen Positionen von Teil-Flächen. Die maximalen Abstände von Stützpunkten von durchzuführenden Interpolation und Extrapolation beim Kriging innerhalb eines Teil-Gebiets sind immer begrenzt und hauptsächlich vom aktuellen gleichmäßigen lokalen Trend zu den Werten der Stützpunkte und einem vorgehend festgelegten maximalen Abstand abhängig. Ohne Kenntnis einer ausreichenden Anzahl an absolut werden kann eine Trendänderung zum Beispiel aus der Topologie abgeleitet werden (siehe zum Beispiel Steigungsregen und Abschattung bei bekannten Windrichtungen). Mit einer Kenntnis der Absolutwerte und deren Verteilung kann die jeweilige maximale Kriging Entfernung bestimmt werden.

Im realen Betrieb werden die aktuellsten Absolutwerte der Messwerte der ungeeichten Radarmessung $RI_{Radar,ungeeicht}$ sowie der gegebenenfalls bereits durchgeführten ungeeichten Dämpfungsmessung der Telekommunikation-Signale $RI_{Tele,ungeeicht}$ vorliegen. Aus Schwankungswerten der $RI_{Radar,ungeeicht}$ der Vergangenheit (ca. bis 10 Minuten oder bis zu 1 Stunde rückwirkend) kann im Betriebsfall berechnet werden, wie sich die $RI_{Radar,ungeeicht}$ zeitlich verändert haben. Dies hilft gegebenenfalls für eine Abschätzung, ob sich die Werte auch weiterhin auf diesem Niveau befinden werden. Für diese Aussage kann gegebenenfalls eine Zusatzinformation bezüglich der Großwetterlage und der Windrichtung verwendet werden.

Ein durch Kriging ermittelter geeichter RI-Wert an einer Position an der bisher kein Wert vorlag, kann von mehreren Stützpunkten abhängen.

Wird bei der Radarmessung im Betriebsfall Trockenheit detektiert: $RI_{Radar,ungeeicht} = 0$; oder durch eine Kenntnis von Windrichtungen vorhergesagt, so werden auch die Auffangbehälter und die entsprechenden Dämpfungsmessungen der Telekommunikation-Signale an dem korrespondierenden Stellen und zu diesen Zeiten diese Trockenheit bestätigen. In diesem Fall muss für diese Gebiete keine aufwändige Planung der Messparameter vorgenommen werden. In den Randbereichen dieser Trockengebiete kann das erfindungsgemäße Verfahren aber nutzbringend eingesetzt werden. Da beim Kriging auch die Werte an den Rändern der RI>0 Gebiete für die Extrapolation bis zu diesen Rändern benötigt werden, somit können dort auch die bekannten Werte der Trockengebiete genutzt werden.

Zudem gibt es dem Fachmann bekannte Literatur, die die unterschiedlichen Eigenschaften bzw. die Vor- und Nachteile der Radarmessungen, der bodennahen Richtfunkmessungen (also die CML Messungen, insbesondere der Dämpfungsmessungen der Telekommunikation-Signale) und der Satellitenmessungen gegenübergestellt: "Rainfall estimation from a German-wide commercial microwave link network: optimized processing and validation for 1 year of data" von Maximilian Graf et al.

CML-basierte (Commercial Microwave Links) Regenintensitäts-Messungen sind Funksignal-Dämpfungs-Messungen zwischen Mobilfunkmasten, die für den Signalweg einen einzigen Mittelwert über eine Zeitdauer von z.B. ca. 2 bis ca. 10 Minuten liefern, der dann repräsentativ z.B. für die Mitte der Strecke gilt. Die Richtfunkstreckenlängen der MNO (Mobile Network Operator) in Deutschland haben Längen von ca. in der Regel 3-6km Länge. Laut der Bundesnetzagentur existierten in Deutschland in 2016 ca. 130.000 CMLs, wovon in 2016 bereits ca. 4.000 von den MNO zu Dämpfungsmessungen genutzt wurden, um die Qualität ihrer Netze zu überwachen. Die bisherigen Datenerhebungen in den Basisstationen werden bisher zwar nicht gespeichert, aber könnten erfindungsgemäß in Zukunft für CML-basierte Niederschlagsmessungen verwendet werden, da die MNO dabei alle anderen Dämpfungsursachen bis auf die der Niederschlagsmenge entlang der Richtfunkstrecke erfindungsgemäß durch zusätzliche Messungen eliminieren können, um die Qualität entlang der Funk-Verbindungsstrecken zu ermitteln.

Beim Ausbau der Mobilfunknetze sind vor allem die Funk-Basisstationen von Bedeutung. Die Anzahl dieser Schnittstellen zwischen drahtlosem und drahtgebundenem Netz ist zum Jahresende 2021 bedingt durch die Abschaltung der 3G-Netze um 17 Prozent auf 187.443 gefallen. Die Zahl der in Betrieb befindlichen LTE-Basisstationen nahm um 9 Prozent auf 82.479 zu. Die Anzahl der 5G-Basisstationen erhöhte sich deutlich um 54 Prozent von 19.510 zum Ende des Jahres 2020 auf 29.959 zum Ende des Jahres 2021. Zusätzlich wurden erstmals Small Cells gemeldet, welche durch Netzverdichtung der Innenstädte zusätzliche Kapazität an Orten hoher Nutzerkonzentration bieten. Dies wirkt sich sowohl auf die Geschwindigkeit des Datendurchsatzes als auch auf die Qualität der Datendarstellung (zum Beispiel Streaming mit hoher Auflösung) aus. Ein Großteil der hier genannten Basisstationen nutzt Dynamic Spectrum Sharing, bei dem bisherige 4G-Nutzungen je nach Bedarf zu 5G-Nutzungen überführt werden. Das volle Potenzial von 5G, wie beispielsweise besonders hohe Datenraten oder geringe Latenzzeiten, wird hiermit noch nicht in jedem Fall erreicht. In der Praxis befinden sich an einem physischen Antennenstandort meist Funk-Basisstationen (85.861) unterschiedlicher Mobilfunkstandards. Die Zahl der Antennenstandorte ist deshalb geringer als die Zahl der Basisstandorte.

Insbesondere die 5G Telekommunikations-Signale weisen im Vergleich zu den herkömmlichen Telekommunikations-Signalen höhere Frequenzen auf, die besonders gut für die Messungen zur Bestimmung von $RI_{Tele}$ geeignet sind. Es ist bekannt, dass insbesondere die Telekommunikation-Signale mit höheren Frequenzen, also insbesondere über 10 GHz, bevorzugt über 15 GHz, oder besonders bevorzugt über 50 GHz besonders geeignet sind eine große Variabilität an Regenmengen durch eine entsprechende Dämpfungsmessung aufzulösen. Ein Telekommunikations-Signal von unter 5 GHz ist beispielsweise nicht in der Lage eine Regenintensität von 0,25 mm/h aufzulösen. Die zu erwartende Entwicklung in dem Mobilfunksektor geht in die Richtung, dass also zukünftig die geeigneten Basisstationen für die entsprechenden Messungen der Regenintensität noch dichter vorhanden sein werden und der Trend auch in Richtung zu noch höheren Frequenzen geht.

An dieser Stelle sei noch einmal der funktionale Zusammenhang der Dämpfungsmessung der Telekommunikation-Signale und der Regenintensität - wie vorstehend schon erläutert - angegeben: Der gängige Ansatz ist ein Potenzmodell für die Dämpfung, $A = k = a * R^b$, wobei R die Regenrate RI ist und die Konstanten a und b Funktionen der Frequenz und der Polarisation sind. Gelegentlich wird die Dämpfungsrate A auch als k bezeichnet. a und b können durch die entsprechende Referenzmesswerte der Auffangbehälter geeicht werden. Der Wert für k ist ein um andere Dämpfungseffekte (beispielsweise Antennenfeuchte, elektrische Bauteile) bereinigter Dämpfungswert, der nur durch den Niederschlag (im wesentlichen Regen) auf der Signalstrecke verursacht wird. Diese Methode ist allgemein bekannt. In den Netzen der MNO werden in der Regel bereits Messungen der k-Werte für Qualitätsüberwachungen durchgeführt. Die entsprechenden Messfrequenzen liegen im Wesentlichen im Bereich von ca. 15-18 GHz. Ein großer Vorteil der CML Methode ist, dass die CMLs bereits in großer Anzahl gut verteilt vorliegen und auch schon von Mobilfunkbetreibern zur Ermittlung der Regenintensität mittels der Dämpfungsmessung eingesetzt werden. Allerdings werden die entsprechenden Messwerte bisher lediglich isoliert betrachtet: "Real-time data acquisition of commercial microwave link networks for hydrometeorological applications" von Christian Chwala et al.

In Deutschland wird die Messung der Regenintensität RI mittels der Radarmessungen beispielsweise durch den RADOLAN-Dienst bereitgestellt. Das derzeit bestmögliche, am schnellsten verfügbare angeeichte RADOLAN-Ergebnis (RW-Produkt für 60 Minuten Regenmengen Intervalle [mm/h]) ist ein angeeichtes Radar-Deutschlandkomposit (Aneichung der Radar-Messungen durch Messungen der Regen Auffangbehälter) mit stündlichen Niederschlagshöhen in einer Intensitätsauflösung von 0,1 mm und in einer räumlichen Auflösung von ca. einem Quadratkilometer, welches zeitnah (innerhalb von 30 Minuten) zur Verfügung steht. Seit dem 25. April 2018 werden diese stündlichen Niederschlagshöhen alle zehn Minuten berechnet, wobei ca. 1.400 Ombrometer Stationen in Deutschland für die Radar-Aneichung (durch Regen Auffangbehälter der stündlich automatisch abrufbaren Ombrometer Stationen und Kriging Methoden) genutzt werden können. Der Zyklus für die Regenmengenintervalle von 60 Minuten ist bedingt durch die Eigenschaften der verwendeten RadarMethode/Elektronik und der Messstellen-Konzeption mit unter anderem 17 C-Band Radarsendern in Deutschland, der Quantisierung der Sender, der Streuung der Sende-Keule, der Dauer eines Rotationszyklus, den nacheinander gescannten Höhenwinkel und der Anzahl und Verteilung, der zur Aneichung genutzten mindestens 1.400 Regenauffangbehälter. Auch Kosten und die Deutschlandweite flächendeckende Bestimmung spielen bei der Zyklusdauer von 60 Minuten eine Rolle. Angeeichte Ergebnisse sind eine wichtige Forderung, um plausible Ergebnisse zu erhalten, da die verschiedenen Verfahren je nach Ausprägung des Regenereignisses tendenziell zu geringe oder zu hohe RI-Werten liefern, was durch i.d.R. unbekannte TröpfchenGrößen und -Verteilungen aber nicht erkennbar ist. Die Tendenz und das Ausmaß zur Über- oder Unterbestimmung kann nur über den Abgleich mit den Werten der Regenauffangbehälter erkannt werden. Im Übrigen ist die funktionale Beschreibung zur Ermittlung der Regenintensität mittels Radarmessungen analog wie die vorstehend beschriebene funktionale Beschreibung mittels der Dämpfungsmessungen und kann wie folgt formuliert werden: $Z = a1 * R^{b1}$, mit Z als der gemessene Radar-Reflexivitäts-Faktor, mit R als der Regenrate RI, und a1 und b1 als Kalibrierungsparameter, die von den bekannten Eigenschaften der Radarmessung, wie beispielsweise von der Frequenz des Signals oder der Temperatur abhängig sind.

Durch verbesserte System-Komponenten und/oder eine Verdichtung des Netzes der aktuell 17 Radar-Stationen könnte die Genauigkeit von RADOLAN gesteigert werden. Eine Genauigkeitssteigerung könnte in Zukunft auch durch die Beschränkung der Radar-Messungen (basierend auf den bodengebundenen Sendestationen) auf nur der Messung der bodennahen Zonen erreicht werden, da diese Messungen bisher nur einen Bruchteil der Messungen ausmacht (aktuell wird je Rotation in mehreren Höhenwinkeln nacheinander gemessen, was dadurch bedingt ist, dass man auch die vertikalen Luftfeuchten (Wolken) bis zu einer gewissen Höhe über dem Boden zusätzlich erfassen will, was aber für die aktuellen bodennahen Niederschläge nicht notwendig ist, da die vertikalen Luftfeuchten nicht ausreichend genau in spätere bodennahe Regenmengen umgerechnet werden können).

Da die funktionalen Zusammenhänge bei angeeichten bodengebundenen Regen-Radar Methoden, wie z.B. RADOLAN-RW, bekannt sind, kann für einen gegebenen Punkt (L,B) oder eine gegebene Flächengröße (z.B. eine Raute mit Schwerpunkt bei L,B) auf der Erdoberfläche auch ein Genauigkeitsmaß z.B. als Standardabweichung berechnet werden, wobei L den Längengrad und B den Breitengrad repräsentieren kann: $\sigma_{RI,Radar,geeicht}$(L,B). Mit $RI_{Radar,geeicht}$(L,B) als der entsprechenden Regenintensität an dieser Stelle, kann der 68-prozentige Vertrauensbereich wie folgt angegeben werden: $RI_{Radar,geeicht} \pm \sigma_{RI,Radar,geeicht}$. Zudem ist es möglich, die entsprechenden Werte anzugeben ohne die Eichung durchzuführen, in diesem Fall folgt also $RI_{Radar,ungeeicht}$ und $\sigma_{RI,Radar,ungeeicht}$.

Entsprechendes gilt für eine flächendeckende Bestimmung der Regenintensitäten durch eine angeeichte Methode der Dämpfungsmessung der Telekommunikation-Signale, also der CML-Methode. Da auch bei dieser Methode alle funktionalen Zusammenhänge bekannt sind, können damit zum einen ungeeichte RI-Werte bestimmt werden und diese ungeeichten Werte dann mit den gleichen Auffangbehältern wie bei der radarbasierten Methode mit bekannten Funktionen und Methoden angeeicht werden.

Das entsprechende Genauigkeitsmaß kann ebenfalls als Standardabweichung formuliert werden: $\sigma_{RI,Tele,geeicht}$(L,B). Mit $RI_{Tele,geeicht}$(L,B) als der entsprechenden Regenintensität an dieser Stelle, kann der 68-prozentige Vertrauensbereich wie folgt angegeben werden: $RI_{Tele,geeicht} \pm \sigma_{RI,Tele,geeicht}$. Zudem ist es möglich, die entsprechenden Werte anzugeben ohne die Eichung durchzuführen, in diesem Fall folgt also $RI_{Tele,ungeeicht}$ und $\sigma_{RI,Tele,ungeeicht}$.

Im Zusammenhang mit Fig. 2 wird erläutert, wie eine genauigkeitsbasierte Planung zu einer veränderten Konfiguration der Messparameter der Mess-Einheiten 130, 140 führen kann (140 ist ein Mobilfunkgerät, das mit einer Basisstation (CT) eine Messungslinie bildet), sodass die gemeinsame Auswertung der Dämpfungsmessungen und der Radarmessungen zuverlässige Werte für die Regenintensität ergeben. Relevant ist hierbei, dass die Genauigkeiten der einzelnen Messmethoden quantifizierbar und zugänglich sind. Dies ist allerdings bereits gegeben, sodass, wie nachstehend gezeigt wird, da die Genauigkeit der Messungen berechnet werden kann und die Messparameter gegebenenfalls angepasst werden können, sodass sich die entsprechende Genauigkeit erhöht werden kann bis eine gewünschte Genauigkeit erreicht ist. Insbesondere werden hierbei die Messparameter der Telekommunikationssignale verändert, da die Messparameter der Radarmessung in der Regel (fest) vorliegen.

Die Radarmessungen erfassen flächendeckend (weitgehend lückenlos) überlappende Gebiete. In einem nächsten Schritt können Parameter der Telekommunikations-Messungen, die auch als CML-basierte (Commercial Microwave Links) bezeichnet werden können, geplant werden. Diese Parameter können beispielsweise sein, welche Basisstationen die entsprechenden Messungen durchführen. In diesem Sinne können die Dämpfungsmessungen der Telekommunikations-Signale auch als Ergänzungsmessungen zu den Radarmessungen bezeichnet werden. Es kann durch den Mess-Algorithmus berechnet werden, ob die geplanten Parameter der Dämpfungsmessungen der Telekommunikation-Signale zu der gewünschten Genauigkeit der Kombinationsmessung aus Radarmessung und Dämpfung der Telekommunikation-Signale führt. Ist dies nicht der Fall, so können die Parameter der Dämpfungsmessung verändert werden, indem beispielsweise noch mehr Basisstationen verwendet werden. Insgesamt führt dies erfindungsgemäß zu einer erheblichen Erhöhung der Genauigkeit der Vorhersage der Regenintensität gegenüber den herkömmlichen Verfahren. Bei dem herkömmlichen Verfahren, werden die Radarmessungen nämlich lediglich den Werten der Auffangbehälter angeeicht.

Dem Fachmann sind die funktionalen Zusammenhänge der drei Messmethoden, nämlich der Radarmessung $RI_{Radar}$, der Telekommunikations-Dämpfungsmessung $RI_{Tele}$ und der Messung mittels der Auffangbehälter $RI_{Aufang}$ bekannt, sodass zu jeder der verschiedenen Methoden auch die intrinsische Genauigkeit, also der Messfehler, bestimmt werden kann. Die Messfehler werden nachstehend wie folgt bezeichnet: Messfehler der Radarmessung $\sigma_{RI,Radar}$, Messfehler der Telekommunikation-Dämpfungsmessung $\sigma_{RI,Tele}$, Messfehler der Messung durch die Auffangbehälter $\sigma_{RI,Auffang}$.

Bevor im Detail darauf eingegangen wird, wie die herkömmlichen Messungen verbessert werden können, soll das Verfahren gemäß einem Aspekt der Erfindung zusammenfassend dargestellt werden.

Es ist ein möglicher Ausgangspunkt, dass ungeeichte Radarmessungen $RI_{Radar,ungeeicht}$ flächendeckend lückenlos vorliegen, die aktuell sind und beispielsweise aus einem laufenden Betrieb von Radarbodenstationen stammen. Zu diesen Messungen liegen ebenfalls die entsprechenden Genauigkeiten vor, die als Gaußfehler innerhalb einer Standardabweichung angegeben werden können $\sigma_{RI,Radar,ungeeicht}$. Zusätzlich liegen die Absolutwerte der Auffangbehälter und deren entsprechende Fehler vor, also $RI_{Auffang}$ und $\sigma_{RI,Auffang}$ - hierbei handelt es sich ja um die tatsächlich gemessenen Werte der Regenintensität, sodass diese nicht mehr geeicht werden müssen. Zusätzlich können die geeichten Radarmessungen aus einer letzten flächendeckenden Auswertung vorliegen: $RI_{Radar,geeicht}$ und $\sigma_{RI,Radar,geeicht}$ - die Werte können beispielsweise mittels des sogenannten Kriging-Verfahrens mittels der Werte der Auffangbehälter angeeicht werden. Das Kriging ist ein bekanntes Verfahren bei dem Werte zwischen Referenzpositionen interpoliert und extrapoliert werden können.

Das Vorliegen dieser Werte ist im Stand der Technik bekannt. Neu ist, dass diese Messwerte, insbesondere im realen Betrieb, durch geeignete zusätzliche Dämpfungsmessungen von Telekommunikationssignalen ergänzt werden. Zunächst einmal ergeben die entsprechenden Dämpfungsmessungen der Telekommunikations-Signale entsprechend ungeeichte Messwerte: $RI_{Tele,ungeeicht}$ und $\sigma_{RI,Tele,ungeeicht}$, die verwendet werden können, um Verbesserungen der $RI_{Radar,geeicht}$ Werte zu erzielen. Hierzu ist vorgesehen, dass ermittelt (insbesondere simuliert) wird, wie ausgewählte Messparameter der Dämpfungsmessungen der Telekommunikations-Signale funktional zusammen mit den Radarmesswerten verarbeitet werden können, um gewissermaßen eine Bestimmung der Regenintensität zu erzielen, die auf beiden Messverfahren beruht und eine hohe Genauigkeit aufweist.

Das kombinierte Ergebnis der Regenintensität aus Radarmessung und Dämpfungsmessung der Telekommunikationssignale wird als $RI_{Radar-Tele,geeicht}$ und der entsprechende Messfehler als $\sigma_{RI,Radar-Tele,geeicht}$ bezeichnet.

Bisher ist keine Methode bekannt, die verschiedenen Messungen gemäß der Erfindung zu kombinieren. Es wäre nämlich beispielsweise ein falscher Ansatz, wenn die ungeeichten Radarmessungen und die entsprechenden ungeeichten Dämpfungsmessungen der Telekommunikation-Signale zu einem gemeinsamen Wert der Regenintensität "gemittelt" werden würden, da die entsprechenden Messungen situationsbedingt unterschiedliche Fehler verursachen und somit sich ihre ungeeichten Messwerte wie Äpfel und Birnen zueinander verhalten, sodass keine korrekte Mittelung dieser Werte möglich ist. So liefern zum Beispiel ungeeichte Telekommunikations-Messungen bei feuchten Antennen zu hohe Werte für die Regenintensität aufgrund systematischer Fehleranteile.

Die Bestimmung der Regenintensität mittels der Radarmessmethode kann also durch die Hinzunahme, insbesondere die geeignete dynamische Hinzunahme, von CML-Messungen auf ausgewählten Strecken erhöht werden. Die angestrebte Verbesserung durch CML-Hinzunahmen (im Sonderfall auch die Hinzunahme einer Messungslinie mit einem Mobilfunktelefon 140) kann für die aktuelle Situation eines z.B. nur Radarbasierten RI-Wertes oberhalb eines vorgegebenen RI_Schwellwertes (RI>0 oder RI>RI_Schwellwert) angestrebt sein oder sogar zur Sicherheit auch bei einem aktuellen RI=0 Wert bereits angestrebt sein, wenn z.B. eine gute Prognose vorliegt, dass es in einem Gebiet in naher Zukunft regnen wird, was z.B. aus der Lage der aktuellen Regengebiete und den Windrichtungen (siehe oben) geschlossen werden könnte. Spezielle Regen-Radar-Methoden mit Differenzenverfahren liefern an jedem Boden Punkt auch die Windrichtung und Windstärke.

Die ungeeichte Kombinationsmessung kann für jeden Ort (L,B) aus den Radarmessungen und den CML-Messungen kann innerhalb einer Standardabweichung wie folgt berechnet werden: $RI_{Radar-Tele,ungeeicht} \pm \sigma_{RI,Radar-}$

$_{Tele,ungeeicht}$. Zusätzlich kann noch eine Eichung mittels der Auffangbehälter erfolgen.

Die geeichte Kombination kann für jeden Ort (L,B) aus den Radarmessungen und den CML-Messungen innerhalb einer Standardabweichung wie folgt berechnet werden: $RI_{Radar-Tele,geeicht} \pm \sigma_{RI,Radar-Tele,geeicht}$. Zusätzlich kann noch eine Eichung mittels der Auffangbehälter erfolgen.

Das Verfahren gemäß Fig. 2 kann auf dem in Fig. 1 gezeigten Mess-Server 110 ausgeführt werden, auf dem ein entsprechender Messalgorithmus implementiert ist. Vermittels der ersten Inputschnittstelle 125 können die Nutzer Zielgrößen definieren, also insbesondere was gemessen werden soll, also z.B. Aersole, Regen, Insekten und/oder mit welchen Genauigkeitsvorgaben und/oder in welchem Gebiet gemessen werden soll. Als Input können über diese Schnittstelle 125 auch Informationen bezüglich der Regenzugsrichtung übermittelt werden. Die Zielvorgabe bezüglich der Genauigkeit wird insbesondere als $\sigma_{RI,Radar-Tele,geeicht}$ definiert. Der Inputschnittstelle 125 können ebenfalls zuletzt ermittelten Genauigkeitsmaße der "reinen" Radarmessung übergeben werden: $\sigma_{RI,Radar,geeicht}$. Es ist möglich die Differenz $\sigma_{RI,Radar,geeicht}$ - $\sigma_{RI,Radar-Tele,geeicht}$. zu berechnen und die zusätzlichen CML-Messungen nur dann auszulösen, falls sich für diese Differenz ein Wert von >0 ergibt. Dieser auszulösende Bedarf kann auch trotz einer aktuellen Messung von $RI_{Radar,geeicht}$ = 0 erfolgen, insbesondere wenn an der für die Messung vorgesehene Stelle (L,B) aufgrund der Informationen der Regenzugsrichtung in Kürze Regen zu erwarten ist.

In Schritt 1 in Fig. 2 stellt der Mess-Algorithmus einen Mess-Plan für die CML-Messungen, also die Dämpfungsmessungen der Telekommunikations-Signale, auf. Der Verfahrensschritte 1 ist bildlich durch die Box 165 dargestellt. Der Mess-Plan wird insbesondere für diejenigen Gebiete aufgestellt, in denen die Genauigkeit der Radarmessung noch unzureichend ist. Der Mess-Plan umfasst die Auswahl, welche Basisstationen 130 die entsprechenden Dämpfungsmessungen untereinander durchführen, welche Frequenzen gewählt werden und/oder die Länge der Messdauer. Eine erste Auswahl dieser Parameter kann insbesondere im Hinblick darauf festgelegt werden, dass die Genauigkeit der CML-Messungenen besser ist als die Genauigkeit der entsprechenden Radarmessung, also das gilt $\sigma_{RI,Radar,ungeeicht}$ - $\sigma_{RI,Tele,ungeeicht}$ > 0 (schlechtere $\sigma_{RI,Tele,ungeeicht}$. Werte könnten aber auch noch in einer weiteren Auswahl genutzt werden). Hierzu können beispielsweise für die entsprechende Auswahl Simulationen oder Einträge einer Datenbank verwendet werden, die $\sigma_{RI,Tele,ungeeicht}$ in Abhängigkeit der frei wählbaren Parameter angeben. Beispielsweise kann in einer solchen Datenbank und/oder der Simulation bekannt sein, welche Dichte an Basisstationen 130 in einem Gebiet zu wählen ist, gegebenenfalls auch noch welche Messdauer und welche Messfrequenz, um eine gewünschte Genauigkeit $\sigma_{RI,Tele,ungeeicht}$ zu erreichen. Bei der Auswahl der Basisstation 130 kann zudem berücksichtigt werden, wie deren aktuelle Auslastung ist. So kann es möglich sein, Basisstationen 130 für die erfindungsgemäße Messung zu reservieren oder andere Basisstation 130 zu wählen, sodass hoch ausgelastete Basisstationen für Nutzer anderer Anwendungen weiterhin zugänglich sind. Nach der entsprechenden Auswahl, können also CML-Messung durchgeführt werden, die die folgenden Werte ergeben: $RI_{Tele,ungeeicht}$ und $\sigma_{RI,Tele,ungeeicht}$. Um die entsprechende Auswertung vornehmen zu können, ob die CML-Messungen eine bessere Genauigkeit als die Radarmessungen aufweisen, können die entsprechenden ungeeichten Messwerte und die korrespondierenden Genauigkeiten der Radarstationen 115, die in der Box 170 gezeigt sind, bei der Auswertung in Schritt 1 berücksichtigt werden.

Die Ausrichtung und Länge der CML-Strecken spielt gegenüber der Anzahl und Lage der Strecken in der Regel nur eine stark untergeordnete Rolle. Die Länge der Strecke kann beim durchzuführenden Kriging durch spezielle geeignete stochastische Gewichtung einer Linie berücksichtigt werden, indem nicht nur der Mittelpunkt der Strecke als Messwert betrachtet, sondern eine Linie als Messort mit mehreren Mess-Punkten gilt, wobei den Mess-Punkten jeweils eine verschiedene Genauigkeit $\sigma_i$ zugewiesen werden kann. Zu den Enden der jeweiligen Strecke wird diese Genauigkeit $\sigma_i$ immer geringer. Insbesondere kann hierbei ein linearer Zusammenhang gewählt werden, wobei eine maximale Genauigkeit - als ein minimales $\sigma_i$ - in der Mitte diese Strecke festgelegt wird. Erweist sich eine erste Auswahl der entsprechenden CML-Messungen als ungeeignet, insbesondere bezüglich der geforderten Genauigkeit, kann eine neue Auswahl iterativ durchgeführt werden, wie nachstehend noch gezeigt wird.

Box 175 stellt die Ausführung von Schritt 2 bildlich dar. Grob gesagt geht es nun darum, die ausgewählten CML-Messungen von ihren jeweiligen Messlinien auf diejenigen Flächen zu erweitern, von denen bereits Radarmessung vorliegen. Hierbei bieten sich verschiedene Optionen. Es ist möglich, als Messwert für die CML-Messungen jeweils beispielsweise den Mittelpunkt der entsprechenden Messstrecke zu wählen oder aber mehrere Punkte für die jeweilige Messstrecke festzulegen, die auch - wie vorstehend beschrieben -jeweils verschiedene Genauigkeitswerte aufweisen können. Liegen dann die entsprechenden Messpunkte i für jede Linie vor - also $\sigma_{i,RI,Tele,ungeeicht}$ und $RI_{i,Tele,ungeeicht}$ - werden diese Werte durch Kriging zu Flächen erweitert. Es hat sich als besonders vorteilhaft für korrekte Vorhersagen der Regenmenge erwiesen, diese Flächen als Ellipsen-Flächen zu wählen, deren Brennpunkte auf der Messlinie oder der Verlängerung der Messlinie der jeweiligen CML-Messung der beteiligten Basisstationen 130 liegt. Haben zudem den Vorteil, dass diese mathematisch exakt berechnet (als auch die Werte $\sigma_{Ellipsenfläche,RI,Tele,ungeeicht}$ und $RI_{Ellipsenfläche,Tele,ungeeicht}$) werden können und die plausibelsten Nachbarschaftsgebiete der CML-Messlinien darstellen. Die Zwischenwerte $RI_{Tele,ungeeicht}$ und $\sigma_{RI,Tele,ungeeicht}$ der Ellipsenfläche werden durch Kriging berechnet, wobei insbesondere die bekannten aktuellen ungeeichten Radarwerte 170 für die Berechnung berücksichtigt werden, da diese lückenlos vorhanden sind. Als Ergebnis liegen dann, was durch die Box 180 bildlich symbolisiert ist $\sigma_{Ellipsenfläche,RI,Tele,ungeeicht}$ und

$RI_{Ellipsenfläche,Tele,ungeeicht}$ für die berechneten Punkte der Ellipsenfläche vor. Die Anzahl der Punkte der Ellipsenfläche für die die Werte der Regenintensität und der Genauigkeit vorliegen, also gewissermaßen die Auflösung der Regenintensität, kann prinzipiell frei gewählt werden.

Nunmehr liegen also die ungeeichten Werte für die Radarmessung und die CML-Messung vor. Diese sollen in dem nächsten Schritt 190 mit den Messwerten von Regenauffangbehälter 185 geeicht werden. Für die Regenauffangbehälter liegen die Absolutwerte der Regenintensität vor, es können aber auch die entsprechenden Genauigkeitswerte für die jeweiligen Messpunkte vorliegen, also $\sigma_{Auffangbehälter}$ und $RI_{Auffangbehälter}$. Liegen die Standorte der Regenauffangbehälter 185 innerhalb der Gebiete der schon berechneten Werte $RI_{Tele,ungeeicht}$ und $\sigma_{RI,Tele,ungeeicht}$ und auch innerhalb deren Ellipsenflächen, so kann der entsprechende Wert der CML-Messung an diesem Standort zur Eichung verwendet werden und in der Folge alle anderen Punkte innerhalb der Ellipsenfläche entsprechend skaliert werden. Liegen die Standorte der Regenauffangbehälter 185 außerhalb der schon berechneten Ellipsenfläche, so können wiederum Kriging-Verfahren, insbesondere unter Verwendung der Radarmessung 170, verwendet werden, um die CML-Messungen entsprechend zu eichen. Als Ergebnis dieser Eichung mit den Regenauffangbehälter 185 ergeben sich also angeeichte CML-Messwerte 200 entlang der ausgewählten Strecken und deren Umgebung, insbesondere deren elliptische Umgebung: $RI_{Tele,geeicht}$ und $\sigma_{RI,Tele,geeicht}$.

Prinzipiell analog werden die ungeeichten Messwerte der Radarmessung 170 $RI_{Radar,ungeeicht}$ und $\sigma_{RI,Radar,ungeeicht}$ unter Zuhilfenahme der Messwerte der Regenauffangbehälter 185 geeicht. Im Prinzip sind die Positionen (L, B) an denen die entsprechenden Radarmessungen geeicht vorliegen sollen frei wählbar. Insbesondere stimmen diese mit den Flächen überein, für die angeeichte CML-Messungen vorliegen. Es ergeben sich also für eine beliebige Auswahl von Positionen (L, B) die angeeichten Werte der 205: $\sigma_{RI,Radar,geeicht}$ und $RI_{Radar,geeicht}$ der Radarmessungen 115.

Da nunmehr und für beide Messverfahren geeichte Messwerte vorliegen, können diese in Schritt 210 miteinander kombiniert werden, um eine verbesserte Berechnung der Regenintensität für die Gebiete zu ermöglichen und/oder zu prüfen, ob die entsprechenden Genauigkeitsanforderungen durch die Auswahl der bisherigen CML-Messungen schon erfüllt sind.

Für jede Position (L,B) am Boden, der auch in den elliptischen Flächen enthalten ist, wird erfindungsgemäß vorgeschlagen die Regenintensität, die durch eine Kombination der beiden Messmethoden erhältlich ist, durch ein sogenanntes gewichtetes Mittel zu berechnen. Hierauf basiert auch die Berechnung der entsprechenden Genauigkeiten der Messung.

$$RI_{Radar-Tele,geeicht} = \frac{RI_{Radar,geeicht}/\sigma_{RI,Radar,geeicht} + RI_{Tele,geeicht}/\sigma_{RI,Tele,geeicht}}{(1/\sigma_{RI,Tele,geeicht} + 1/\sigma_{RI,Radar,geeicht})}$$

Soll in diesem Schritt lediglich die Prognose des Genauigkeitszugewinns durch Hinzunahme der entsprechenden CML-Messung betrachtet werden, ist im Fall des gewichteten Mittels hierzu gar kein Absolutwert der Regenintensität nötig, da die entsprechende Genauigkeit der Kombinationsmessung wie folgt berechnet werden kann:

$$\sigma_{RI,Radar-Tele,geeicht} = \sqrt{(0,5 * \sigma_{RI,Radar,geeicht})^2 + (0,5 * \sigma_{RI,Tele,geeicht})^2}$$

Optionale Bemerkung: eine Eliminierung aller bisher verwendeten CML-Messungen kann durch Umformen der obigen Gleichung erfolgen, wobei $\sigma_{RI,Tele,geeicht}$ in diesem Fall die kumulierte Genauigkeit aller zu eliminierenden CML-Messungen repräsentiert:

$$\sigma_{RI,Radar,geeicht} = \sqrt{(2 * \sigma_{RI,Radar-Tele,geeicht})^2 - (0,5 * \sigma_{RI,Tele,geeicht})^2}.$$

Natürlich ist auch hier die resultierende Genauigkeit $\sigma_{RI,Radar,geeicht}$ von den Absolutwerten unabhängig und nur von den Genauigkeitswerten und festen Skalaren abhängig. Somit ist diese spezielle Prognose für die zukünftige kumulierte Genauigkeit $\sigma_{RI,Radar,geeicht}$ berechenbar. Aber Vorsicht: Das gilt nur für den Sonderfall, das alle bisher verwendeten CML-Messungen eliminiert werden sollen und der Wert $\sigma_{RI,Tele,geeicht}$ wie oben beschrieben ermittelt wurde. Der Grund dafür liegt in der Aneichungsmethode mit Kriging. $\sigma_{RI,Radar-Tele,geeicht}$ kann aus der letzten Fehleranalyse bekannt sein.

Prinzipiell hat man nun in dem nächsten Schritt 215 die Möglichkeit schon das Ergebnis $RI_{Radar-Tele,geeicht}$ der Regenintensität für eine entsprechende Vorhersage zu verwenden oder aber zu prüfen, ob die bisherige Auswahl der CML-Messparameter ausreichend ist, um den Genauigkeitsanforderungen der Zielvorgabe zu genügen. In diesem Sinn kann in Schritt 215 eine Prüfung auf Zielerreichung vorgenommen werden.

Ob die Zielvorgaben der Genauigkeit erreicht wurden, kann prinzipiell auf mehrere Art und Weisen festgestellt werden. Beispielsweise kann von einem Nutzer festgelegt werden, dass für jeden Messpunkt eine bestimmte Genauigkeit zu erreichen ist. Die Genauigkeitsanforderungen können dann erfüllt sein, wenn $\sigma_{RI,Radar\text{-}Tele,geeicht}$ für alle diese Punkte oder für eine bestimmte Anzahl dieser Messpunkte die Zielvorgaben erfüllt. Die verschiedenen Werte $\sigma_{RI,Radar\text{-}Tele,geeicht}$ entlang aller Positionen (L,B) könnten beispielsweise auch gemittelt werden, wobei dann untersucht wird, ob die Mittelung den Zielvorgaben genügt. Es ist eine weitere Möglichkeit, die nachfolgend im Detail beschrieben wird, an allen Positionen (L,B) einen Differenzwert aus der gewünschten Genauigkeit und dem entsprechenden $\sigma_{RI,Radar\text{-}Tele,geeicht}$ Wert zu berechnen und dann zu prüfen, ob eine Summe dieser Differenzen einen Schwellenwert unter- oder überschreitet. Hierbei kann beispielsweise die Regelung getroffen werden, dass ein $\sigma_{RI,Radar\text{-}Tele,geeicht}$ Wert an einer Position nur dann ein Beitrag zu dieser Summe leistet, wenn in dieser Position die Zielvorgabe nicht erreicht wird.

Es kann also eine Zielfunktion Z für (sich ausschließende) Gebiete G(i) auf Erfüllung der Zielvorgaben geprüft werden. Die Zielvorgabe kann eine erlaubte Abweichungstoleranz für das jeweilige Zielgebiet G(i) sein:

$$Z = \left( \sum F(Diff(L,B)) \right) / Anzahl\ Diff(L,B)$$

Hierin folgt Diff(L,B) aus den lokalen Zielwert-Genauigkeiten eines Gebietes G(i) mit seinem Gebietszielwert. Ob die Genauigkeiten in der Fläche erreicht sind, kann durch die Funktion Z geprüft werden, wobei die Funktion F eine Funktion der Differenzen Diff(L,B) zwischen prognostizierter Genauigkeiten und vorgegebener Zielwert-Genauigkeiten ist. Hier kann gelten:
Diff(L,B) = $\sigma_{RI,Radar\text{-}Tele,geeicht}$ (L,B) - Gebietszielwert(Gebiet G(i)) und F = Diff(L,B) oder F = (Diff(L,B))$^2$. Die Abweichungstoleranz kann vom Nutzer frei gewählt werden oder kann vorgegeben sein als mittlere Abweichung in G(i) aus der $\sigma_{RI,Radar\text{-}Tele,geeicht}$ Prognose. Die Positionen (L,B) können entlang eines vorgegeben Rasters liegen und dort berechnet werden. Der Punkteabstand eines solchen Rasters kann 1 km, 5 km oder 10 km betragen. Die Wahl des Punkteabstands kann insbesondere auch vom Anwendungsfall des Nutzers abhängen. *Anzahl Diff(L,B)* hängt von der Gebietsgröße und der gewählten Raster weiter ab und bedeutet die Anzahl der genutzten Diff(L,B) Werte. In diesem L-B Raster können auch die Werte aus dem Kriging genutzt werden.

Die Zielvorgabe ist erreicht, wenn die Hinzunahme der ausgewählten CML-Messungen dazu geführt hat, dass "Z < Abweichungstoleranz" gilt. Ist dies der Fall kann in Schritt 220 der Start der Messung der Regenintensitäten, insbesondere mit den ausgewählten CML-Messungen, durchgeführt werden. Die Prognosen können dann an die Nutzer übermittelt werden und erfüllen deren Zielvorgaben bezüglich der Genauigkeit der Prognose. Die Zielvorgabe kann insbesondere auch nur für einige ausgewählte Gebiete G(i) erfüllt sein, wobei in diesem Fall nur in diesen ausgewählten Gebieten die Messung gestartet wird.

Andere Prüfungen auf Zielerfüllung sind auch möglich, so z.B. nicht nur eine Mittelwert-Berechnung der Diff(L,B), sondern zusätzlich noch die Berechnung der Standardabweichung dieses Mittelwertes, womit dann ein statistischer Hypothesentest im Vergleich zur vorgegebenen Abweichungstoleranz erfolgen kann. Der einfache oder quadratische Mittelwert könnte aber auch als wesentlich zu gut ">>" ermittelt werden, wodurch erkannt wird, dass in der aktuellen Prognose zu viele oder zu gute CML-Messungen hinzugefügt wurden.

Bemerkung: Aufgrund des Kriging Verfahrens zur Erzeugung der $\sigma_{RI,Tele,geeicht}$ Werte für jeden Flächenpunkt der elliptischen Flächen wird die Genauigkeit der Absolutwerte $RI_{Tele,geeicht}$ umso mehr abnehmen, je weiter ein Bodenpunkt von der ihm nächsten CML-Messungslinie entfernt ist. Üblicherweise nimmt man, wenn keine anderen Informationen vorliegen, hierbei Gewichtungen vor, die reziprok zur Entfernung sind oder Funktionen der reziproken Entfernung sind. Liegen aber verwertbare Zusatzinformationen vor, z.B. wie in diesem Fall die $RI_{Radar,ungeeicht}$ und deren Genauigkeiten $\sigma_{RI,Radar,ungeeicht}$, so können diese Werte in der Kriging Methode für eine plausiblere "Inter- und Extrapolation" genutzt. Sind Gebiete ausreichend weit von der nächsten CML-Messungslinie entfernt, so verändern sich die bisherigen $\sigma_{RI,Radar\text{-}Tele,geeicht}$ Werte in diesen Gebieten weniger signifikant und man kann annehmen, dass dort noch ausreichend genau die vorherigen $\sigma_{RI,Radar,geeicht}$ gelten. Dieser Effekt kann zum einen bei der Auswahl der Positionen der CML-Messungen genutzt werden, aber auch algorithmisch, indem bei Hinzunahme von CML-Messungen das jeweilige Kriging-Gebiet (die elliptische Fläche) begrenzt wird und auch die Prüfungen auf Zielerreichung mit obiger Funktion Z() auf kleinere Gebiete (auf die elliptische Fläche oder kleinere elliptische Flächen innerhalb der Kriging Flächen) begrenzt wird, wodurch ohne signifikanten Verlust bei der Genauigkeit der Rechenaufwand sehr stark reduziert werden kann.

Sind die Messungen in Gebieten G(i) zu genau und/oder zu ungenau und entsprechen somit nicht der Zielvorgabe, kann die Auswahl der CML-Messparameter für diese Gebiete oder für alle Gebiete in Schritt 225 verändert werden. Sind die Messungen zu genau kann insbesondere die Anzahl der CML-Messungen reduziert werden und/oder die Zeitdauer der Messung verringert werden was die Genauigkeiten verschlechtert. Sind die Messungen zu ungenau kann insbesondere die Frequenz der Telekommunikationssignale für die CML-Messung erhöht werden, zusätzliche CML-Messungen, insbesondere unter der Hinzunahme weiterer Basisstationen, geplant werden, und/oder die Messdauer verlängert werden. Insbesondere können neue CML-Messungen gezielt an diejenigen Positionen (L, B) vorgenommen werden an denen eine Verbesserung erzielt werden soll. Die CML-Messungen können näher an den Auffangbehältern vorgenommen werden, um bessere Werte für die Eichung zu erzielen. Insbesondere werden die Maßnahmen zur Verbesserung der Genauigkeit in Teilgebieten vorgenommen, für die eine reduzierte Genauigkeit innerhalb eines Gesamtgebietes bestimmt wurde.

Wie durch eine Veränderung der Messparameter Veränderungen bezüglich der Genauigkeit erzielt werden, kann insbesondere auch simuliert werden. Durch Zugriff auf eine Simulationsdatenbank, die verschiedene Messparameter mit sich hieraus ergebenden Genauigkeitswerten aufweist, kann eine neue Auswahl getroffen werden. Insbesondere ist es hierbei auch möglich sowohl die ursprüngliche Auswahl der CML-Messungen bzw. der entsprechenden Messparameter als auch die Änderungen durch Zuhilfenahme einer trainierten künstlichen Intelligenz zu bestimmen. Die künstliche Intelligenz kann als Trainingsdaten mit Datensätzen verschiedener Messparameter und den sich ergebenden Genauigkeiten, insbesondre $\sigma_{RI,Tele,geeicht}$ oder $\sigma_{RI,Tele,ungeeicht}$ trainiert werden. Insbesondere können diese Datensätze Ort und Zeit aufgelöst sein, also $\sigma_{RI,Tele,geeicht}(r,t)$ oder $\sigma_{RI,Tele,ungeeicht}(r,t)$. Dies ermöglicht der künstlichen Intelligenz zielgerichtet eine Auswahl zu treffen und die Messparameter so einzustellen, dass die entsprechenden Zielvorgaben hinsichtlich der Genauigkeit erfüllt werden. Durch die Orts- und die Zeitauflösung wird berücksichtigt, dass sich Wetter-vorsagen in Abhängigkeit von dem Ort und/oder der Zeit anders verhalten können.

Die Iteration 225 bezüglich der Auswahl der CML-Messparameter (welche Linien und/oder welche Betriebsparameter) kann prinzipiell beliebig oft vorgenommen werden, bis die Zielvorgabe erreicht ist. Es könnte aber auch zusätzlich oder alternativ die Zielvorgabe geändert werden.

Nachstehend soll der Fall beschrieben werden, wie CML-Messungen geändert werden können, insbesondere indem die Messstrecken bzw. die Messlinie geändert werden. Der ursprünglich ausgewählte Satz an CML-Messlinien soll als X bezeichnet werden und der geänderte Satz an CML-Messlinien, der durch Löschen einiger der ursprünglichen Messlinie und/oder Hinzufügen neuer Messlinie entstehen kann, soll als Y bezeichnet werden. Aus $\sigma_{X,RI,Radar-Tele,geeicht}$ wird also $\sigma_{Y,RI,Radar-Tele,geeicht}$. Es wird dabei im Folgenden zur Vereinfachung vorausgesetzt, dass sich nur die CML-Messlinien ändern und alle anderen Parameter konstant sind.

Zunächst: Nutzung der bekannten lückenlosen $\sigma_{RI,Radar,geeicht}$ (L,B)-Werte eines Gebietes G des letzten Zeitraums. Dann Nutzung der neuen Messlinien Y und Berechnung der $\sigma_{Y,RI,Tele,ungeeicht}$ entlang der Messlinien Y und deren elliptischer Umgebung. Dann mittels $\sigma_{Y,RI,Tele,ungeeicht}$ entlang der Messlinien Y und entlang der elliptischer Umgebung und den Kriging Werten der Auffangbehälter erfolgt die Berechnung der $\sigma_{Y,RI,Tele,geeicht}$ entlang der Messlinien Y und entlang der elliptischen Umgebung. Dann erfolgt mittels der $\sigma_{Y,RI,Tele,geeicht}$ und Kriging die Berechnung der lückenlosen $\sigma_{Y,RI,Tele,geeicht}$ Werte für die Positionen (L, B) in einem Gebiet. Dann Nutzung der Daten aus den vorherigen Schritten, um mittels Fehlerfortpflanzung lückenlos die Werte $\sigma_{Y,RI,Radar-Tele,geeicht}$ zu bestimmen.

Die Anforderungen an die Prognose zur Vorhersage der Regenintensitäten und die entsprechenden Zielvorgaben können beispielsweise durch folgende Nutzer bzw. Trigger veranlasst bzw. spezifiziert werden:

1. Grundanforderungen des Genauigkeitsniveaus eines Dienste-Betreibers z.B. Störung/Ausfall einer Radarstation;

2. Wegen Streuung des Radar-Kegels, großer Abstand von Radarkegeln und/oder Überlappungen und wegen geographischer Besonderheiten. Es kann sinnvoll sein bestimmte CML-Messlinien immer hinzuzunehmen, wenn diese Radar-geometrische (Entfernung vom Sender und Überlappungen mehrerer Sender) oder Bodentopologiespezifische Problemzonen verbessern.

3. Störung/Ausfall bisheriger CML-Messungen.

4. Wegen speziellen gebietsspezifischen Anforderungen von Nutzern, wie z.B. Landwirten.

5. Hoheitlichen Anforderungen (Hydrologie).

6. CML-Messungen sollten nicht zu kurzfristig zwischen genutzt-ungenutzt-genutzt hin und her wechseln, sondern ggf. je nach Wetterlage die Messungen weiterführen. Das heißt auch bei aussetzendem Regen können die CML-Messungen noch eine Zeitlang weitergeführt werden. Da CML-Dämpfungsmessungen auf einigen Linien von den Netzbetreibern allein wegen der Überwachung der Netzqualität durchgeführt werden, so könnten diese Signale dann auch immer parallel zu RI Messungen genutzt werden.

7. Aktuelle Regengebiete und zukünftige Regengebiete: Eine andere Gruppe von CML-Messungen sind von der Lage der aktuellen Niederschlagsgebiete und den Windverhältnissen in diesen Gebieten abhängig, also temporär hinzuzunehmende und zu eliminierende Messungen, um die Genauigkeiten der Regenbestimmung nur zu Regenzeiten zu steigern, da die potenzielle Genauigkeitssteigerung in Trockenzeiten ohne Zugewinn ist, da der Absolut-Wert für RI dann RI=0 ist und die berechnete Standardabweichung von RI-Werten mit RI=Null ohne realen Nutzen ist. Letzteres kann alleine durch ungeeichte Radarmessungen detektiert werden, siehe Fig. 2 mit den Absolutwerten "Reale Radar_ungeeicht_RI in Box a" als Bedarfstrigger. Die meisten Boden-Radar Stationen messen auch die Feuchtigkeit in höheren Schichten, die sich bei bekannter Windrichtung/-stärke in Zukunft mit hoher Wahrscheinlichkeit in aktuell noch Niederschlagslosen Gebieten abregnen werden. Die Informationen zu aktuellen Luftfeuchten in höheren Schichten und Windverhältnisse könnten auch aus anderen Quellen als dem Boden-Radar als Trigger für CML-Messungen dienen.

8. Eine CML-Zuschaltung nur allein durch ungeeichte Radarmessungen und Regendetektion, da Aneichungen wegen der Auslesefrequenz der Auffangbehälter ggf. z.T. zu lange dauern könnten und später alle Daten aus Radar, CML und Auffangbehälter mit Vorliegen der Daten der Auffangbehälter zeitversetzt verarbeitet werden können und dazu auch die CML-Messungen von Beginn an (Beginn des Regens) vorliegen sollten.

Abschließend sei angemerkt, dass in Fig. 2 durch die Beschriftungen der Spezialfall als Beispielablauf dargestellt wird, dass die Radar-Messungen bereits vorliegende reale Messungen sind und die CML-Messungen fiktive Messungen sind, da sie den speziellen zu prüfenden Vorschlag von CML-Messungen bedeuten, die noch nicht durchgeführt wurden. Auch die Werte der Regenauffangbehälter sind in Fig. 2 als reale Messwerte vorliegend beschrieben. Prinzipiell sind aber auch alle anderen Kombinationen von real und/oder fiktiv für die drei Mess-Einheiten (Radar, CML, Auffangbehälter) für einen aktuellen Betrieb und den Prognosen für Auswirkungen von Veränderungen in den Mess-Einheiten denkbar und aus den bisher beschriebenen funktionalen Zusammenhängen eindeutig herleitbar. Alle Kombinationen können in ihren Auswirkungen simuliert werden und iterativ verbessert werden, so z.B. auch die fiktive Verdichtung der Auffangbehälter durch zusätzliche Stationen.

**Patentansprüche**

1. Verfahren zur Bestimmung von Luftbestandteilen, insbesondere von Regen, in einem Gebiet, wobei das Verfahren die folgenden Schritte umfasst:

   • Messen der Luftbestandteile in dem Gebiet mittels eines ersten Messverfahrens, wobei das erste Messverfahren auf einer Radarmessung basiert, wobei die Messung des ersten Messverfahrens als Ergebnis einen Absolutwert der Luftbestandteile $RI_{Radar}$ und/oder einen Messfehler des Absolutwerts der Luftbestandteile $\sigma_{RI,Radar}$ für Messpunkte des Gebiets ergibt;
   • Messen der Luftbestandteile in dem Gebiet mittels eines zweiten Messverfahrens, wobei das zweite Messverfahren auf einer ersten Auswahl von Messparametern einer Dämpfungsmessung von Telekommunikationssignalen in dem Gebiet basiert, wobei die Messung des zweiten Messverfahrens als Ergebnisse einen Absolutwert der Luftbestandteile $RI_{Tele}$ und/oder einen Messfehler des Absolutwerts der Luftbestandteile $\sigma_{RI,Tele}$ für Messpunkte des Gebiets ergibt;

   **dadurch gekennzeichnet,**
   **dass** die Ergebnisse des ersten Messverfahrens und des zweiten Messverfahrens miteinander funktional kombiniert werden, um einen kombinierten Absolutwert der Luftbestandteile $RI_{Radar-Tele}$ und/oder einen kombinierten Messfehler des Absolutwerts der Luftbestandteile $\sigma_{RI,Radar-Tele}$ zu berechnen.

2. Verfahren nach einem der vorhergehenden Ansprüche, **dadurch gekennzeichnet, dass** die Messparameter umfassen:

   • Frequenz des Telekommunikationssignals,
   • Messdauer,
   • Temperatur,
   • Art der Messeinheiten,
   • Anzahl der Messeinheiten,
   • Position der Messeinheiten, und/oder
   • Messlinien.

3. Verfahren nach Anspruch 2, **dadurch gekennzeichnet, dass** die Messeinheiten die unterschiedlichen Mobilfunkanbietern zugeordnet sind für die zweite Messung kombiniert werden.

4. Verfahren nach einem der vorhergehenden Ansprüche, **dadurch gekennzeichnet, dass** zumindest eine weitere Auswahl an Messparametern erstellt wird, wenn der berechnete kombinierten Messfehler des Absolutwerts der Luftbestandteile $\sigma_{RI,Radar\text{-}Tele}$ Zielvorgaben nicht genügt und/oder zu gut ist.

5. Verfahren nach Anspruch 4, wobei die erste und/oder die weitere Auswahl die Auslastung der Messeinheiten, insbesondere der Basisstationen, berücksichtigt.

6. Verfahren nach einem der vorhergehenden Ansprüche, **dadurch gekennzeichnet, dass** die erste Auswahl oder die weitere Auswahl an Messparametern zumindest teilweise mittels einer künstlichen Intelligenz, Simulationen, Expertenwissen, Zufall und/oder einem Gleichverteilungsgrundsatz erstellt wird.

7. Verfahren nach einem der vorhergehenden Ansprüche, **dadurch gekennzeichnet, dass** die Ergebnisse des ersten Messverfahrens und des zweiten Messverfahrens an übereinstimmenden Positionen jeweils mittels eines dritten Messverfahrens geeicht werden, wobei die Ergebnisse an den übereinstimmenden Positionen miteinander kombiniert werden.

8. Verfahren nach Anspruch 7, **dadurch gekennzeichnet, dass** die Ergebnisse des zweiten Messverfahrens, insbesondere für die übereinstimmenden Positionen, durch Extrapolation und/oder Interpolation, insbesondere basierend auf den Ergebnissen des ersten Messverfahrens, berechnet werden.

9. Verfahren nach Anspruch 8, **dadurch gekennzeichnet, dass** die Ergebnisse des ersten Messverfahrens zu elliptischen Flächen erweitert werden, deren Brennpunkte auf der Messlinie oder der Verlängerung der Messlinie der jeweiligen Messeinheit der Telekommunikationsmessung liegt.

10. Verfahren nach einem der vorhergehenden Ansprüche, wobei die zweite Messung vorgenommen wird, wenn durch eine Aneichung der Messwerte der zweiten Messung eine Verbesserung der Genauigkeit im Vergleich zur der alleinigen ersten angeeichten Messung erzielt wird, insbesondere, wenn gilt:

$$\sigma_{RI,Radar,geeicht} - \sigma_{RI,Radar-Tele,geeicht} > 0.$$

11. Verfahren nach einem der vorhergehenden Ansprüche, wobei die zweite Messung für Gebiete mit $RI_{Radar} = 0$ nicht geplant und/oder nicht durchgeführt wird.

12. Verfahren nach Anspruch 11, wobei für eine Ermittlung einer Prognose von $RI_{Radar} = 0$ Windrichtungsdaten verwendet werden.

13. Mess-Server zur Bestimmung von Luftbestandteilen, insbesondere von Regen, in einem Gebiet,

• wobei der Mess-Server eingerichtet ist Ergebnisse eines ersten Messverfahrens basierend auf Radarmessungen zur Messung der Luftbestandteile in dem Gebiet zu erhalten, wobei die Messung des ersten Messverfahrens als Ergebnis einen Absolutwert der Luftbestandteile $RI_{Radar}$ und/oder einen Messfehler des Absolutwerts der Luftbestandteilen $\sigma_{RI,Radar}$ für Messpunkte des Gebiets ergibt;
• wobei der Mess-Server eingerichtet ist Ergebnisse eines zweiten Messverfahrens zur Messung der Luftbestandteile in dem Gebiet zu erhalten, wobei das zweite Messverfahren auf einer ersten Auswahl von Messparametern einer Dämpfungsmessung von Telekommunikationssignalen in dem Gebiet basiert, wobei die Messung des zweiten Messverfahrens als Ergebnisse einen Absolutwert der Luftbestandteile $RI_{Tele}$ und/oder einen Messfehler des Absolutwerts der Luftbestandteilen $\sigma_{RI,Tele}$ für Messpunkte des Gebiets ergibt,

**dadurch gekennzeichnet,**
**dass** der Mess-Server eingerichtet ist, die Ergebnisse der ersten und der zweiten Messung miteinander zu kombinieren und/oder die erste Auswahl von Messparametern der Dämpfungsmessung von Telekommunikationssignalen zu erstellen.

14. System zur Bestimmung von Luftbestandteilen, insbesondere von Regen, in einem Gebiet, aufweisend

• ein erster Typ Mess-Einheiten eingerichtet zur Durchführung eines ersten Messverfahrens, wobei das erste Messverfahren auf Radarmessungen in einem Gebiet basiert und als Ergebnis einen Absolutwert der Luftbestandteile $RI_{Radar}$ und/oder einen Messfehler des Absolutwerts der Luftbestandteilen $\sigma_{RI,Radar}$ für Messpunkte des Gebiets ergibt;

• ein zweiter Typ Mess-Einheiten eingerichtet zur Durchführung eines zweiten Messverfahrens, wobei das zweite Messverfahren auf einer ersten Auswahl von Messparametern einer Dämpfungsmessung von Telekommunikationssignalen in dem Gebiet basiert, wobei die Messung des zweiten Messverfahrens als Ergebnisse einen Absolutwert der Luftbestandteile $RI_{Tele}$ und/oder einen Messfehler des Absolutwerts der Luftbestandteilen $\sigma_{RI,Tele}$ für Messpunkte des Gebiets ergibt;

• einen Mess-Server nach Anspruch 13.

**15.** Computerprogramm, umfassend Befehle, die bei der Ausführung des Programms durch einen Computer diesen veranlassen, das Verfahren nach Anspruch 1 auszuführen.

**Geänderte Patentansprüche gemäss Regel 137(2) EPÜ.**

**1.** Verfahren zur Bestimmung von Luftbestandteilen, insbesondere von Regen, in einem Gebiet, wobei das Verfahren die folgenden Schritte umfasst:

• Messen der Luftbestandteile in dem Gebiet mittels eines ersten Messverfahrens, wobei das erste Messverfahren auf einer Radarmessung basiert, wobei die Messung des ersten Messverfahrens als Ergebnis einen Absolutwert der Luftbestandteile $RI_{Radar}$ und/oder einen Messfehler des Absolutwerts der Luftbestandteile $\sigma_{RI,Radar}$ für Messpunkte des Gebiets ergibt;
• Messen der Luftbestandteile in dem Gebiet mittels eines zweiten Messverfahrens, wobei das zweite Messverfahren auf einer ersten Auswahl von Messparametern einer Dämpfungsmessung von Telekommunikationssignalen in dem Gebiet basiert, wobei die Messung des zweiten Messverfahrens als Ergebnisse einen Absolutwert der Luftbestandteile $RI_{Tele}$ und/oder einen Messfehler des Absolutwerts der Luftbestandteile $\sigma_{RI,Tele}$ für Messpunkte des Gebiets ergibt;

**dadurch gekennzeichnet,**
**dass** die Ergebnisse des ersten Messverfahrens und des zweiten Messverfahrens miteinander funktional kombiniert werden, um einen kombinierten Absolutwert der Luftbestandteile $RI_{Radar-Tele}$ und/oder einen kombinierten Messfehler des Absolutwerts der Luftbestandteile $\sigma_{RI,Radar-Tele}$ zu berechnen.

**2.** Verfahren nach einem der vorhergehenden Ansprüche, **dadurch gekennzeichnet, dass** die Messparameter umfassen:

• Frequenz des Telekommunikationssignals,
• Messdauer,
• Temperatur,
• Art der Messeinheiten,
• Anzahl der Messeinheiten,
• Position der Messeinheiten, und/oder
• Messlinien.

**3.** Verfahren nach Anspruch 2, **dadurch gekennzeichnet, dass** die Messeinheiten die unterschiedlichen Mobilfunkanbietern zugeordnet sind für die zweite Messung kombiniert werden.

**4.** Verfahren nach einem der vorhergehenden Ansprüche, **dadurch gekennzeichnet, dass** zumindest eine weitere Auswahl an Messparametern erstellt wird, wenn der berechnete kombinierten Messfehler des Absolutwerts der Luftbestandteile $\sigma_{RI,Radar-Tele}$ Zielvorgaben nicht genügt und/oder zu gut ist.

**5.** Verfahren nach Anspruch 4, wobei die erste und/oder die weitere Auswahl die Auslastung der Messeinheiten, insbesondere der Basisstationen, berücksichtigt.

**6.** Verfahren nach einem der vorhergehenden Ansprüche, **dadurch gekennzeichnet, dass** die erste Auswahl oder die weitere Auswahl an Messparametern zumindest teilweise mittels einer künstlichen Intelligenz, Simulationen, Expertenwissen, Zufall und/oder einem Gleichverteilungsgrundsatz erstellt wird.

7. Verfahren nach einem der vorhergehenden Ansprüche, **dadurch gekennzeichnet, dass** die Ergebnisse des ersten Messverfahrens und des zweiten Messverfahrens an übereinstimmenden Positionen jeweils mittels eines dritten Messverfahrens geeicht werden, wobei die Ergebnisse an den übereinstimmenden Positionen miteinander kombiniert werden.

8. Verfahren nach Anspruch 7, **dadurch gekennzeichnet, dass** die Ergebnisse des zweiten Messverfahrens, insbesondere für die übereinstimmenden Positionen, durch Extrapolation und/oder Interpolation, insbesondere basierend auf den Ergebnissen des ersten Messverfahrens, berechnet werden.

9. Verfahren nach Anspruch 8, **dadurch gekennzeichnet, dass** die Ergebnisse des ersten Messverfahrens zu elliptischen Flächen erweitert werden, deren Brennpunkte auf der Messlinie oder der Verlängerung der Messlinie der jeweiligen Messeinheit der Telekommunikationsmessung liegt.

10. Verfahren nach einem der vorhergehenden Ansprüche, wobei die zweite Messung vorgenommen wird, wenn durch eine Aneichung der Messwerte der zweiten Messung eine Verbesserung der Genauigkeit im Vergleich zur der alleinigen ersten angeeichten Messung erzielt wird, insbesondere, wenn gilt: $\sigma_{RI,Radar,geeicht} - \sigma_{RI,Radar-Tele,geeicht} > 0$.

11. Verfahren nach einem der vorhergehenden Ansprüche, wobei die zweite Messung für Gebiete mit $RI_{Radar} = 0$ nicht geplant und/oder nicht durchgeführt wird.

12. Verfahren nach Anspruch 11, wobei für eine Ermittlung einer Prognose von $RI_{Radar} = 0$ Windrichtungsdaten verwendet werden.

13. Mess-Server zur Bestimmung von Luftbestandteilen, insbesondere von Regen, in einem Gebiet,

   • wobei der Mess-Server eingerichtet ist Ergebnisse eines ersten Messverfahrens basierend auf Radarmessungen zur Messung der Luftbestandteile in dem Gebiet zu erhalten, wobei die Messung des ersten Messverfahrens als Ergebnis einen Absolutwert der Luftbestandteile $RI_{Radar}$ und/oder einen Messfehler des Absolutwerts der Luftbestandteilen $\sigma_{RI,Radar}$ für Messpunkte des Gebiets ergibt;
   • wobei der Mess-Server eingerichtet ist Ergebnisse eines zweiten Messverfahrens zur Messung der Luftbestandteile in dem Gebiet zu erhalten, wobei das zweite Messverfahren auf einer ersten Auswahl von Messparametern einer Dämpfungsmessung von Telekommunikationssignalen in dem Gebiet basiert, wobei die Messung des zweiten Messverfahrens als Ergebnisse einen Absolutwert der Luftbestandteile $RI_{Tele}$ und/oder einen Messfehler des Absolutwerts der Luftbestandteilen $\sigma_{RI,Tele}$ für Messpunkte des Gebiets ergibt,

   **dadurch gekennzeichnet,**
   **dass** der Mess-Server eingerichtet ist, die Ergebnisse der ersten und der zweiten Messung miteinander zu kombinieren und/oder einen kombinierten Messfehler des Absolutwerts der Luftbestandteile $\sigma_{RI,Radar-Tele}$ zu berechnen.

14. System zur Bestimmung von Luftbestandteilen, insbesondere von Regen, in einem Gebiet, aufweisend

   • ein erster Typ Mess-Einheiten eingerichtet zur Durchführung eines ersten Messverfahrens, wobei das erste Messverfahren auf Radarmessungen in einem Gebiet basiert und als Ergebnis einen Absolutwert der Luftbestandteile $RI_{Radar}$ und/oder einen Messfehler des Absolutwerts der Luftbestandteilen $\sigma_{RI,Radar}$ für Messpunkte des Gebiets ergibt;
   • ein zweiter Typ Mess-Einheiten eingerichtet zur Durchführung eines zweiten Messverfahrens, wobei das zweite Messverfahren auf einer ersten Auswahl von Messparametern einer Dämpfungsmessung von Telekommunikationssignalen in dem Gebiet basiert, wobei die Messung des zweiten Messverfahrens als Ergebnisse einen Absolutwert der Luftbestandteile $RI_{Tele}$ und/oder einen Messfehler des Absolutwerts der Luftbestandteilen $\sigma_{RI,Tele}$ für Messpunkte des Gebiets ergibt;
   • einen Mess-Server nach Anspruch 13.

15. Computerprogramm, umfassend Befehle, die bei der Ausführung des Programms durch einen Computer das System nach Anspruch 14 veranlasst, das Verfahren nach Anspruch 1 auszuführen.

100

115

120

*Regen := Luftfeuchte o. Niederschlag*

Radar-Messungen aus
größeren Höhen
(ungenau,
da Feuchtigkeit in größeren Höhen
Fehler verursachen)

Optional: Externe Hilfsdaten hier
Regen-relevante Wetterdaten.
Windstärke, -richtung, H-/-T-Gebiete,
Temperatur, ggfs. Topologie bzgl.
Steigungsregen

Internet

110

Alternative Zielgrößen
- Luftverunreinigung
- Insekten

130

Server

Vorgaben an CTs(=Basisstationen) und Handys s. EM2
- Ziel-Fläche F
- Genauigkeitsanspruch an Zielgrößen
- Zielgrößen z.B. Regenintensität
- Nutzbare CTs Handys?

Nutzer API
- Bauer
- Katastrophenschutz
- Maßnahmenkontrolle
  Aufforstung

125

Messungsplan der CTs
- CTs
- Messungs-Strecken
- Sender-/Empfängerdichte
- Messungs-Signal-Frequenz
- Polarisierung
- Start-Zeitpupkt der/Messung
- Messupgsparameter (Dauer, mono-bidirektional, ..)

150

Vorgaben:
diskrete delta-t Messungen
mit Starts zu t0, t1, t2, ...

Auswertung der CT Messungen bzgl. Regen
- Regenintensität je Polygonfläche
- Regenzugrichtung
- Prognosen

Ergebnisse der
Einzelstreckenmessungen
(genau als Radar)

Auswertung der CT Messungen bzgl.
Luftverunreinigungen

Kalibrierung der Radarmessungen

Dauerhafte
Messungen

Iteration

Radar

Mobilfunk

Mobilfunk

Mobilfunk

Mobilfunk

Legende >10 GHz
Messstrecken:

Handy-CT o.
Strecke

statisch o.
kinematisch

Längere
Strecken

nur außen
u. nur kürz

außen u. innen
u. nur kurz

nur innen
u. nur kurz

statisch

Gebiet G radar-bedingter Regenwahrscheinlichkeit >x%
zum Zeitpunkt t0 (hier z.B. gleichzeitig die Ziel-Fläche F)

für G o. F nicht notwendig

CT

o. Handy s.
EM2

130

innen :=
im Regen
Gebiet

135

Regenzugsgeschwindigkeit

130

145

140

160

CT

Strecken des initialen Messungsplan zu t0

Fig. 1

Fig. 2

**Potenzial aller CML (Richtfunkstrecken)** mit bekannten Parametern und funktionalen Zusammenhängen.

CML1
CML2
CML3
CML4
...
CMLw

130

Messstation u. -ausfälle

**Boden-Radar Stationen** mit Gebiets-Überlappungen

mit bekannten Parametern und funktionalen Zusammenhängen.

R1
R2
...
Ru

115

Lückenlos u. überlappend

Aktuelle Radar ungeeicht u. bei neuester Technik auch Wind Daten

(a) Reale Radar_ungeeicht_RI Radar_ungeeicht_RIsigma

170

Nur an Rändern von Gebieten mit Regen und in Regennähe

(1) Auswahl fiktiver CML mit den Vorgaben Positionen:
CML_ungeeicht_RI =Radar_ungeeicht_RI;
CML_ungeeicht_RIsigma i.d.R. < Radar_sigma;

Bedarfstrigger
- Gebiete u. deren RadarCML_angeeicht_RIsigma Zielfunktionen Regen-Zugrichtung

Dienste-Betreiber alle Gebiete X,Y,...Z

165

Nutzer (z.B. Landwirt) Gebiet X während t1 bis t2

125

(0)

225

Nur für die CML-Auswahl

Für Kriging elliptischen Umgebungen

Für CML und deren

(2) Kriging (**)

Regen-Zugrichtung

175

Wind Daten

Externe Quellen für Windrichtungen-/stärken

205 Reale Radar_angeeicht_RI Radar_angeeicht_RIsigma

RIsigma des letzten Betriebs

(c) Für alle Positionen Radar_angeeicht_RIsigma(L,B)

7

Kriging Request für alle Positionen

Für Kriging

(b) Kriging (**)

CML_ungeeicht_RI CML_ungeeicht_RIsigma

180

Kriging Request CML u. Umgebungen

Für CML und deren Umgebungen

(3) Kriging (**)

190

2 3 4 5 6

(4)

Fiktive CML_angeeicht_RI CML_angeeicht_RIsigma

8

200

**Simulations-Datenbank bzgl.** Genauigkeiten/Genauigkeitszugewinne durch CML-Konfigurationen

**Messwerte-Datenbank** RadarCML_angeeicht_RI RadarCML_angeeicht_RIsigma

1

(*) = Bei der CML Auswahl wird versucht einige bisherige CMLs beizubehalten, falls Start bereits mit Radar+CML erfolgte.
(**) = Liefert interpolierte Messwerte und deren Genauigkeitsmaße

1 — Änderung der CML Auswahl oder ggf. Veränderung der Bedarfstrigger

**Regen-Auffangbehälter**
mit realen B-Messwerte u.
Bsigma-Messgenauigkeiten
an den bekannten Positionen
(automatische Auslesung der
wahren Regenmengen in Bodennähe)

210

B1

B2 — 185

2
3 Einzelne Positionen
4 mit B-Messwert B3
5 u. Bsigma
6

...

225

Iteration

Bv

Prognose durch fiktive CML-Messungen

7     8

5 **Fiktive RadarCML_angeeicht_RIsigma(L,B)**

215

225

6 Prüfung der RadarCML_angeeicht_RIsigma auf Zielerreichung     Nein

Ja

7 Start von CML Messungen

220

Abb. 1: Übersichtsdiagramm
Genauigkeitsbasierte Planung angeeichter Regenintensitätsbestimmungen
(RadarCML_angeeicht_RI) aus dynamischer Kombination von aktueller
Boden-Radar- und fiktiver Richtfunk-Messungen (CML)

# Fig. 2 (Continued)

**Europäisches Patentamt**
**European Patent Office**
**Office européen des brevets**

# EUROPÄISCHER RECHERCHENBERICHT

Nummer der Anmeldung

EP 23 18 7454

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2017/371074 A1 (ELKABETZ SHIMON [US] ET AL) 28. Dezember 2017 (2017-12-28) * Zusammenfassung * * Abbildungen 3-14, 31-34 * * Absätze [0081] – [0208], [0374] – [0376] * | 1-15 | INV. G01W1/10 G01S13/95 G01W1/14 |
| X | KIM MIN-SEONG ET AL: "Attenuation Correction of X-Band Radar Reflectivity Using Adjacent Multiple Microwave Links", REMOTE SENSING, Bd. 12, Nr. 13, 3. Juli 2020 (2020-07-03), Seite 2133, XP093122053, CH ISSN: 2072-4292, DOI: 10.3390/rs12132133 * Zusammenfassung * * Abbildung 2 * * Absätze [0002] – [0005] * | 1,13,15 | |
| X | BLANDINE BIANCHI ET AL: "Rainfall nowcasting by combining radars, microwave links and rain gauges", ARXIV.ORG, CORNELL UNIVERSITY LIBRARY, 201 OLIN LIBRARY CORNELL UNIVERSITY ITHACA, NY 14853, 28. Oktober 2018 (2018-10-28), XP081070847, * Zusammenfassung * * Seiten 3-16 * | 1,13,15 | RECHERCHIERTE SACHGEBIETE (IPC) G01W G01S H04W |

Der vorliegende Recherchenbericht wurde für alle Patentansprüche erstellt

| Recherchenort | Abschlußdatum der Recherche | Prüfer |
|---|---|---|
| Den Haag | 23. Januar 2024 | Totò, Nicola |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

# EP 4 498 132 A1

## ANHANG ZUM EUROPÄISCHEN RECHERCHENBERICHT
## ÜBER DIE EUROPÄISCHE PATENTANMELDUNG NR.

EP 23 18 7454

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-01-2024

| Im Recherchenbericht angeführtes Patentdokument | Datum der Veröffentlichung | Mitglied(er) der Patentfamilie | Datum der Veröffentlichung |
|---|---|---|---|
| US 2017371074 A1 | 28-12-2017 | EP 3475729 A2 | 01-05-2019 |
| | | US 2017371074 A1 | 28-12-2017 |
| | | US 2018348402 A1 | 06-12-2018 |
| | | US 2021149079 A1 | 20-05-2021 |
| | | US 2022373713 A1 | 24-11-2022 |
| | | WO 2017223475 A2 | 28-12-2017 |

EPO FORM P0461

Für nähere Einzelheiten zu diesem Anhang : siehe Amtsblatt des Europäischen Patentamts, Nr.12/82

28

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **H. MESSER** ; **A. ZINEVICH** ; **A. PINHAS**. Environmental monitoring by wireless communication networks. *Science*, 2006, vol. 312 (5774), 713, https://science.sciencemag. org/content/312/5774/713